# EUROPEAN PATENT APPLICATION

(11) **EP 4 443 977 A1**
(43) Date of publication of application: **09.10.2024**
(21) Application number: 22918535.0
(22) Date of filing: 30.12.2022
(51) Int. Cl.: H04W 40/22, H04W 40/34

(54) **COMMUNICATION METHOD AND COMMUNICATION APPARATUS**

(30) Priority: 05.01.2022 CN 202210009198
(71) Applicant: Huawei Technologies Co., Ltd., Shenzhen, Guangdong 518129 (CN)
(72) Inventor: ZHU, Shichao, Shenzhen, Guangdong 518129 (CN); SUN, Fei, Shenzhen, Guangdong 518129 (CN); SHI, Yulong, Shenzhen, Guangdong 518129 (CN)
(74) Representative: Pfenning, Meinig & Partner mbB
(86) International application number: PCT/CN2022/144335
(87) International publication number: WO 2023/131094

(57) **Abstract**

This application provides a communication method and a communication apparatus. The method includes: receiving a first message from a second node, where the first message indicates to reconfigure a resource that is in a first topology and that is used to serve first traffic, the first topology is a topology controlled by a first node, and the first traffic is traffic of a third node or traffic of a downstream node of the third node; and reconfiguring, based on the first message, the resource that is in the first topology and that is used to serve the first traffic. There is an RRC connection between the third node and each of the first node and the second node, there is an F1 connection between the third node and the second node, the first node is a CU in a first IAB donor node, and the second node is a CU in a second IAB donor node. In this application, the first message is exchanged between the first node and the second node. The first message may indicate the first node to reconfigure the resource that is in the topology of the first node and that is used to serve the first traffic. This implements inter-CU traffic control.

## Description

This application claims priority to Chinese Patent Application No. 202210009198.4, filed with the China National Intellectual Property Administration on January 5, 2022 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

An integrated access and backhaul (integrated access and backhaul, IAB) network technology is introduced into a 5th generation (5th generation, 5G) mobile communication system. A wireless transmission solution is used for both an access link (access link) and a backhaul link (backhaul link) in an IAB network, and this reduces optical fiber deployment, reduces deployment costs, and improves deployment flexibility. The IAB network includes an IAB node (IAB node) and an IAB donor (IAB donor). Typically, the IAB node includes a mobile termination (mobile termination, MT) part and a distributed unit (distributed unit, DU) part, and the IAB donor includes a central unit (central unit, CU) part and a distributed unit (distributed unit, DU) part.

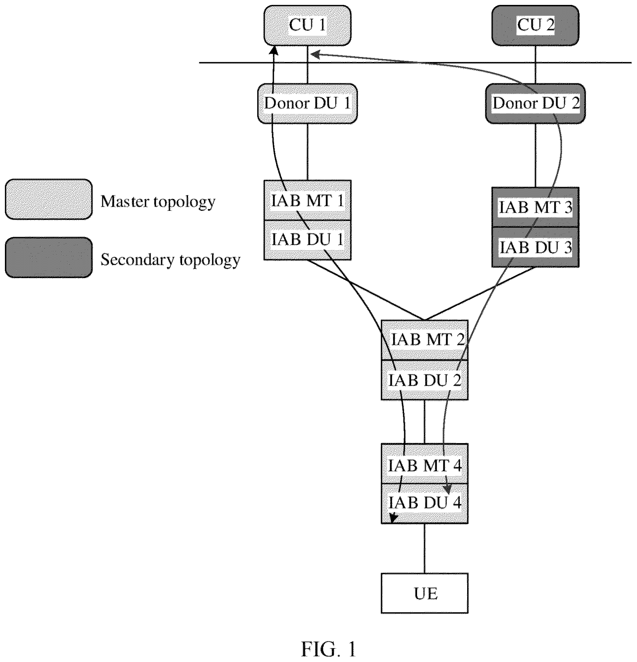

An interface between a CU and a DU is referred to as an F1 interface. In a dual connectivity (dual connectivity, DC) scenario, an IAB node is allowed to be dual-connected to different IAB donors. The dual-connected IAB node is referred to as a boundary node (boundary node), an IAB donor to which a CU having an F 1 interface with a DU part of the boundary node belongs is referred to as a master node, and an IAB donor to which a CU having no F1 interface with the DU part of the boundary node belongs is referred to as a secondary node. Information is transferred between the master node CU and the secondary node CU through an Xn interface. For example, FIG. 1 is a diagram of a network structure in which an IAB node is inter-CU dual-connected. As shown in FIG. 1, a CU 1 and a donor DU 1 are respectively a CU part and a DU part of a master node (namely, an IAB donor 1), and a CU 2 and a donor DU 2 are respectively a CU part and a DU part of a secondary node (namely, an IAB donor 2). An IAB MT and an IAB DU are respectively an MT part and a DU part of the IAB node. For example, an IAB MT 1 and an IAB DU 1 are respectively an MT part and a DU part of an IAB node 1. A set of the master node and an IAB node having an F1 interface with the CU in the master node is referred to as a master topology, and a set of the secondary node and an IAB node having an F1 interface with the CU in the secondary node is referred to as a secondary topology. As shown in FIG. 1, the CU 1, the donor DU 1, the IAB node 1, an IAB node 2, and an IAB node 4 form a master topology, and the CU 2, the donor DU 2, and an IAB node 3 form a secondary topology. It should be noted that, in the system architecture shown in FIG. 1, traffic control in the master topology is performed by the CU 1, and traffic control in the secondary topology is performed by the CU 2. When an IAB node finds that congestion occurs in a topology (for example, the master topology or the secondary topology) or signal quality of a serving cell is poor, the IAB node reports a status indication message only to a node (the CU 1 or the CU 2) associated with the IAB node, and the status indication message is used to trigger the node receiving the message for traffic control. For example, when the IAB node 2 or the IAB node 4 finds congestion or poor signal quality of a serving cell, the IAB node 2 and the IAB node 4 send a status indication message only to the CU 1. For another example, when the IAB node 3 finds congestion or poor signal quality of a serving cell, the IAB node 3 sends a status indication message only to the CU 2. As a result, traffic control in an inter-CU dual connectivity network architecture cannot be implemented.

### SUMMARY

This application provides a communication method and a communication apparatus, to implement inter-CU resource reconfiguration in a scenario in which an IAB node is dual-connected to different IAB-donor-CUs, and implement inter-CU traffic control.

According to a first aspect, this application provides a communication method. The method is applied to a first node, and the method includes:
receiving a first message from a second node, where the first message indicates to reconfigure a resource that is in a first topology and that is used to serve first traffic, the first topology is a topology controlled by the first node, and the first traffic is traffic of a third node or traffic of a downstream node of the third node; and
reconfiguring, based on the first message, the resource that is in the first topology and that is used to serve the first traffic, where
there is an RRC connection between the third node (namely, an MT of the third node) and each of the first node and the second node, there is an F1 connection between the third node (namely, a DU of the third node) and the second node, the first node is a central unit CU in a first integrated access and backhaul IAB donor node, and the second node is a central unit CU in a second IAB donor node.

In this application, the first node may be a CU in a master IAB donor node, and the second node may be a CU in a secondary IAB donor node; or the first node may be a CU in a secondary IAB donor node, and the second node may be a CU in a master IAB donor node. The first message is exchanged between the first node and the second node. The first message can indicate the first node to reconfigure a resource that is in a topology of the first node and that is used to serve the first traffic, to implement inter-CU traffic control.

In a possible implementation, the first message includes at least one of the following information: indication information for reconfiguring all resources for the first traffic, a resource corresponding to a quality of service index in the resource for the first traffic, and a resource corresponding to a tunnel endpoint identifier TEID in the resource for the first traffic.

In this application, the first message indicates resource reconfiguration at different granularities, for example, reconfiguration of all resources, or resource reconfiguration at a granularity of a QoS index, or resource reconfiguration at a granularity of an F1-U tunnel, to implement traffic control at different granularities.

In a possible implementation, the first message further indicates a traffic control trigger reason.

In a possible implementation, the traffic control trigger reason includes that congestion occurs or signal quality does not meet a quality requirement.

In a possible implementation, the method further includes:
sending a first feedback of the first message to the second node, where the first feedback is used to trigger the second node to reconfigure a resource that is in a second topology and that is used to serve the first traffic, and the second topology is a topology controlled by the second node.

In this application, the second node receives the first feedback from the first node. In an aspect, the second node may reconfigure, based on the first feedback, the resource that is in the second topology and that is used to serve the first traffic, thereby implementing inter-CU traffic control. In another aspect, it may also be used to determine that the first node has successfully received the first message.

In a possible implementation, the second topology includes a distributed unit DU of the second node.

In a possible implementation, the first topology includes a DU of the first node.

In a possible implementation, the reconfiguring, based on the first message, the resource that is in the first topology and that is used to serve the first traffic includes:
deleting, based on the first message, the resource that is in the first topology and that is used to serve the first traffic.

In a possible implementation, the first IAB donor node is a secondary IAB donor node, and the second IAB donor node is a master IAB donor node; or
the first IAB donor node is a master IAB donor node, and the second IAB donor node is a secondary IAB donor node.

In a possible implementation, the first message is an Xn message.

According to a second aspect, this application provides a communication method. The method is applied to a second node, and the method includes:
determining a first message, where the first message indicates to reconfigure a resource that is in a first topology and that is used to serve first traffic, the first topology is a topology controlled by a first node, and the first traffic is traffic of a third node or traffic of a downstream node of the third node; and
sending the first message to the first node, where
there is an RRC connection between the third node and each of the first node and the second node, there is an F1 connection between the third node and the second node, the first node is a central unit CU in a first integrated access and backhaul IAB donor node, and the second node is a central unit CU in a second IAB donor node.

In a possible implementation, the first message includes at least one of the following information: indication information for reconfiguring all resources for the first traffic, a resource corresponding to a quality of service index in the resource for the first traffic, and a resource corresponding to a tunnel endpoint identifier TEID in the resource for the first traffic.

In a possible implementation, the first message further indicates a traffic control trigger reason.

In a possible implementation, the traffic control trigger reason includes that congestion occurs or signal quality does not meet a quality requirement.

In a possible implementation, the method further includes:
receiving a first feedback of the first message from the first node; and
reconfiguring, in response to the first feedback, a resource that is in a second topology and that is used to serve the first traffic, where the second topology is a topology controlled by the second node.

In a possible implementation, the second topology includes a distributed unit DU of the second node.

In a possible implementation, the first topology includes a DU of the first node.

In a possible implementation, the reconfiguring a resource that is in a second topology and that is used to serve the first traffic includes:
deleting the resource that is in the second topology and that is used to serve the first traffic.

In a possible implementation, the first IAB donor node is a secondary IAB donor node, and the second IAB donor node is a master IAB donor node; or
the first IAB donor node is a master IAB donor node, and the second IAB donor node is a secondary IAB donor node.

In a possible implementation, the first message is an Xn message.

In a possible implementation, the method further includes:
receiving a status indication message, where the status indication message is used to determine the first message.

According to a third aspect, this application provides a communication method. The method is applied to a first node, and the method includes:
receiving, from a second node, at least one target internet protocol IP address corresponding to a data packet of a first service;
determining a first parameter corresponding to each target IP address; and
sending, to the second node, the first parameter corresponding to each target IP address, where
the first parameter reflects a quality of service QoS requirement of the first service, the target IP address and the first parameter corresponding to the target IP address are used to determine a radio link control channel RLC CH corresponding to the first service, the first node is a central unit CU in a secondary IAB donor node in a dual connectivity mode, and the second node is a central unit CU in a master IAB donor node in the dual connectivity mode.

In this application, an inter-CU routing method is provided for a scenario in which an IAB node is dual-connected to different IAB-donor-CUs. Specifically, the second node obtains a mapping relationship between a DSCP, an IPv6 flow label, and a target IP address from the first node, so that the second node writes the mapping relationship into a packet header of the data packet, thereby ensuring correct inter-topology transmission of the data packet and improving communication reliability.

In a possible implementation, one target IP address corresponds to one first parameter; and
the sending, to the second node, the first parameter corresponding to each target IP address includes:
sending, to the second node based on a receiving order of the at least one target IP address, the first parameter corresponding to each target IP address; or
sending a 1:1 mapping relationship between the first parameter and each target IP address to the second node.

In a possible implementation, a plurality of target IP addresses correspond to one first parameter; and
the sending, to the second node, the first parameter corresponding to each target IP address includes:
sending, to the second node based on a receiving order of the at least one target IP address, the first parameter corresponding to each target IP address; or
sending a 1:N mapping relationship between the first parameter and the plurality of target IP addresses to the second node.

In a possible implementation, the target IP address includes an IPv4 address, and the first parameter includes a differentiated services code point DSCP.

In a possible implementation, the target IP address includes an IPv6 address, and the first parameter includes a DSCP and an IPv6 flow label.

According to a fourth aspect, this application provides a communication method. The method is applied to a second node, and the method includes:
sending, to a first node, at least one target internet protocol IP address corresponding to a data packet of a first service; and
receiving, from the first node, a first parameter corresponding to each target IP address, where
the first parameter reflects a quality of service QoS requirement of the first service, the target IP address and the first parameter corresponding to the target IP address are used to determine a radio link control channel RLC CH corresponding to the first service, the first node is a central unit CU in a secondary IAB donor node in a dual connectivity mode, and the second node is a central unit CU in a master IAB donor node in the dual connectivity mode.

In a possible implementation, one target IP address corresponds to one first parameter; and
the receiving, from the first node, a first parameter corresponding to each target IP address includes:
receiving, from the first node based on a sending order of the at least one target IP address, the first parameter corresponding to each target IP address; or
receiving a 1:1 mapping relationship between the first parameter and each target IP address from the first node.

In a possible implementation, a plurality of target IP addresses correspond to one first parameter; and
the receiving, from the first node, a first parameter corresponding to each target IP address includes:
receiving, from the first node based on a sending order of the at least one target IP address, the first parameter corresponding to each target IP address; or
receiving a 1:N mapping relationship between the first parameter and the plurality of target IP addresses from the first node.

In a possible implementation, the target IP address includes an IPv4 address, and the first parameter includes a differentiated services code point DSCP.

In a possible implementation, the target IP address includes an IPv6 address, and the first parameter includes a DSCP and an IPv6 flow label.

According to a fifth aspect, this application provides a communication method. The method is applied to a second node, and the method includes:
sending, to a first node, a first internet protocol IP address corresponding to a data packet of a first service;
receiving a first mapping relationship between the first IP address and a first backhaul adaptation protocol routing identifier BAP routing ID from the first node; and
sending a second mapping relationship between the first BAP routing ID and a second BAP routing ID to a third node, where the second mapping relationship is used to reroute the data packet of the first service, where
the first node is a central unit CU in a target IAB donor node of the third node, and the second node is a central unit CU in a source IAB donor node of the third node.

In this application, an inter-CU rerouting method is provided for a handover scenario. Specifically, the second node interacts with the first node, uses the IP address as an intermediate variable, generates a mapping relationship between a new BAP routing ID and an old BAP routing ID, and notifies the third node (namely, a boundary node). This can implement data packet rerouting, improve a transmission success rate, and reduce service interruption.

In a possible implementation, the first IP address includes a source IP address.

In a possible implementation, the method further includes:
obtaining a third mapping relationship between the first IP address and the second BAP routing ID; and
determining the second mapping relationship based on the first mapping relationship and the third mapping relationship.

According to a sixth aspect, this application provides a communication method. The method is applied to a first node, and the method includes:
receiving, from a second node, a first internet protocol IP address corresponding to a data packet of a first service; and
sending a first mapping relationship between the first IP address and a first backhaul adaptation protocol routing identifier BAP routing ID to the second node.

In a possible implementation, the first IP address includes a source IP address.

According to a seventh aspect, this application provides a communication apparatus. The apparatus may be a first node, and the apparatus includes:
a transceiver unit, configured to receive a first message from a second node, where the first message indicates to reconfigure a resource that is in a first topology and that is used to serve first traffic, the first topology is a topology controlled by the first node, and the first traffic is traffic of a third node or traffic of a downstream node of the third node; and
a processing unit, configured to reconfigure, based on the first message, the resource that is in the first topology and that is used to serve the first traffic, where
there is an RRC connection between the third node and each of the first node and the second node, there is an F1 connection between the third node and the second node, the first node is a central unit CU in a first integrated access and backhaul IAB donor node, and the second node is a central unit CU in a second IAB donor node.

In a possible implementation, the first message includes at least one of the following information: indication information for reconfiguring all resources for the first traffic, a resource corresponding to a quality of service index in the resource for the first traffic, and a resource corresponding to a tunnel endpoint identifier TEID in the resource for the first traffic.

In a possible implementation, the first message further indicates a traffic control trigger reason.

In a possible implementation, the traffic control trigger reason includes that congestion occurs or signal quality does not meet a quality requirement.

In a possible implementation, the transceiver unit is further configured to:
send a first feedback of the first message to the second node, where the first feedback is used to trigger the second node to reconfigure a resource that is in a second topology and that is used to serve the first traffic, and the second topology is a topology controlled by the second node.

In a possible implementation, the second topology includes a distributed unit DU of the second node.

In a possible implementation, the first topology includes a DU of the first node.

In a possible implementation, the processing unit is specifically configured to:
delete, based on the first message, the resource that is in the first topology and that is used to serve the first traffic.

In a possible implementation, the first IAB donor node is a secondary IAB donor node, and the second IAB donor node is a master IAB donor node; or
the first IAB donor node is a master IAB donor node, and the second IAB donor node is a secondary IAB donor node.

In a possible implementation, the first message is an Xn message.

According to an eighth aspect, this application provides a communication apparatus. The apparatus may be a second node, and the apparatus includes:
a processing unit, configured to determine a first message, where the first message indicates to reconfigure a resource that is in a first topology and that is used to serve first traffic, the first topology is a topology controlled by a first node, and the first traffic is traffic of a third node or traffic of a downstream node of the third node; and
a transceiver unit, configured to send the first message to the first node, where
there is an RRC connection between the third node and each of the first node and the second node, there is an F1 connection between the third node and the second node, the first node is a central unit CU in a first integrated access and backhaul IAB donor node, and the second node is a central unit CU in a second IAB donor node.

In a possible implementation, the first message includes at least one of the following information: indication information for reconfiguring all resources for the first traffic, a resource corresponding to a quality of service index in the resource for the first traffic, and a resource corresponding to a tunnel endpoint identifier TEID in the resource for the first traffic.

In a possible implementation, the first message further indicates a traffic control trigger reason.

In a possible implementation, the traffic control trigger reason includes that congestion occurs or signal quality does not meet a quality requirement.

In a possible implementation, the transceiver unit is further configured to receive a first feedback of the first message from the first node; and
the processing unit is further configured to reconfigure, in response to the first feedback, a resource that is in a second topology and that is used to serve the first traffic, where the second topology is a topology controlled by the second node.

In a possible implementation, the second topology includes a distributed unit DU of the second node.

In a possible implementation, the first topology includes a DU of the first node.

In a possible implementation, the processing unit is specifically configured to:
delete the resource that is in the second topology and that is used to serve the first traffic.

In a possible implementation, the first IAB donor node is a secondary IAB donor node, and the second IAB donor node is a master IAB donor node; or
the first IAB donor node is a master IAB donor node, and the second IAB donor node is a secondary IAB donor node.

In a possible implementation, the first message is an Xn message.

In a possible implementation, the transceiver unit is further configured to:
receive a status indication message, where the status indication message is used to determine the first message.

According to a ninth aspect, this application provides a communication apparatus. The apparatus is a first node, and the apparatus includes:
a transceiver unit, configured to receive, from a second node, at least one target internet protocol IP address corresponding to a data packet of a first service; and
a processing unit, configured to determine a first parameter corresponding to each target IP address, where
the transceiver unit is configured to send, to the second node, the first parameter corresponding to each target IP address; and
the first parameter reflects a quality of service QoS requirement of the first service, the target IP address and the first parameter corresponding to the target IP address are used to determine a radio link control channel RLC CH corresponding to the first service, the first node is a central unit CU in a secondary IAB donor node in a dual connectivity mode, and the second node is a central unit CU in a master IAB donor node in the dual connectivity mode.

In a possible implementation, one target IP address corresponds to one first parameter; and
the transceiver unit is specifically configured to:
send, to the second node based on a receiving order of the at least one target IP address, the first parameter corresponding to each target IP address; or
send a 1:1 mapping relationship between the first parameter and each target IP address to the second node.

In a possible implementation, a plurality of target IP addresses correspond to one first parameter; and
the transceiver unit is specifically configured to:
send, to the second node based on a receiving order of the at least one target IP address, the first parameter corresponding to each target IP address; or
send a 1:N mapping relationship between the first parameter and the plurality of target IP addresses to the second node.

In a possible implementation, the target IP address includes an IPv4 address, and the first parameter includes a differentiated services code point DSCP.

In a possible implementation, the target IP address includes an IPv6 address, and the first parameter includes a DSCP and an IPv6 flow label.

According to a tenth aspect, this application provides a communication apparatus. The apparatus is a second node, and the apparatus includes:
a transceiver unit, configured to send, to a first node, at least one target internet protocol IP address corresponding to a data packet of a first service, where
the transceiver unit is configured to receive, from the first node, a first parameter corresponding to each target IP address; and
the first parameter reflects a quality of service QoS requirement of the first service, the target IP address and the first parameter corresponding to the target IP address are used to determine a radio link control channel RLC CH corresponding to the first service, the first node is a central unit CU in a secondary IAB donor node in a dual connectivity mode, and the second node is a central unit CU in a master IAB donor node in the dual connectivity mode.

In a possible implementation, one target IP address corresponds to one first parameter; and
the transceiver unit is specifically configured to:
receive, from the first node based on a sending order of the at least one target IP address, the first parameter corresponding to each target IP address; or
receive a 1:1 mapping relationship between the first parameter and each target IP address from the first node.

In a possible implementation, a plurality of target IP addresses correspond to one first parameter; and
the transceiver unit is specifically configured to:
receive, from the first node based on a sending order of the at least one target IP address, the first parameter corresponding to each target IP address; or
receive a 1:N mapping relationship between the first parameter and the plurality of target IP addresses from the first node.

In a possible implementation, the target IP address includes an IPv4 address, and the first parameter includes a differentiated services code point DSCP.

In a possible implementation, the target IP address includes an IPv6 address, and the first parameter includes a DSCP and an IPv6 flow label.

According to an eleventh aspect, this application provides a communication apparatus. The apparatus is used on a second node, and the apparatus includes:
a transceiver unit, configured to send, to a first node, a first internet protocol IP address corresponding to a data packet of a first service, where
the transceiver unit is configured to receive a first mapping relationship between the first IP address and a first backhaul adaptation protocol routing identifier BAP routing ID from the first node;
the transceiver unit is configured to send a second mapping relationship between the first BAP routing ID and a second BAP routing ID to a third node, where the second mapping relationship is used to reroute the data packet of the first service; and
the first node is a central unit CU in a target IAB donor node of the third node, and the second node is a central unit CU in a source IAB donor node of the third node.

In a possible implementation, the first IP address includes a source IP address.

In a possible implementation, the apparatus further includes a processing unit, and the processing unit is configured to:
obtain a third mapping relationship between the first IP address and the second BAP routing ID; and
determine the second mapping relationship based on the first mapping relationship and the third mapping relationship.

According to a twelfth aspect, this application provides a communication apparatus. The apparatus is a first node, and the apparatus includes:
a transceiver unit, configured to receive, from a second node, a first internet protocol IP address corresponding to a data packet of a first service, where
the transceiver unit is configured to send a first mapping relationship between the first IP address and a first backhaul adaptation protocol routing identifier BAP routing ID to the second node.

In a possible implementation, the first IP address includes a source IP address.

According to a thirteenth aspect, this application provides a communication apparatus. The apparatus may be a first node, or may be an apparatus in a first node, or may be an apparatus that can be used together with the first node. The communication apparatus may alternatively be a chip system. The communication apparatus may perform the method according to the first aspect and/or the third aspect and/or the sixth aspect. Functions of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effect thereof, refer to the method according to the first aspect and/or the third aspect and/or the sixth aspect, and the beneficial effect thereof. Repeated content is not described again.

According to a fourteenth aspect, this application provides a communication apparatus. The apparatus may be a second node, or may be an apparatus in a second node, or may be an apparatus that can be used together with the second node. The communication apparatus may alternatively be a chip system. The communication apparatus may perform the method according to the second aspect and/or the fourth aspect and/or the fifth aspect. Functions of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effect thereof, refer to the method according to the second aspect and/or the fourth aspect and/or the fifth aspect, and the beneficial effect thereof. Repeated content is not described again.

According to a fifteenth aspect, this application provides a communication apparatus. The apparatus may be a first node, and the communication apparatus includes a processor and a transceiver. The processor and the transceiver are configured to execute a computer program or instructions stored in at least one memory, so that the apparatus implements the method according to any one of the first aspect and/or the third aspect and/or the sixth aspect.

According to a sixteenth aspect, this application provides a communication apparatus. The apparatus may be a first node, and the communication apparatus includes a processor, a transceiver, and a memory. The processor, the transceiver, and the memory are coupled. The processor and the transceiver are configured to implement the method according to any one of the first aspect and/or the third aspect and/or the sixth aspect.

According to a seventeenth aspect, this application provides a communication apparatus. The apparatus may be a second node, and the communication apparatus includes a processor and a transceiver. The processor and the transceiver are configured to execute a computer program or instructions stored in at least one memory, so that the apparatus implements the method according to any one of the second aspect and/or the fourth aspect and/or the fifth aspect.

According to an eighteenth aspect, this application provides a communication apparatus. The apparatus may be a second node, and the communication apparatus includes a processor, a transceiver, and a memory. The processor, the transceiver, and the memory are coupled. The processor and the transceiver are configured to implement the method according to any one of the second aspect and/or the fourth aspect and/or the fifth aspect.

According to a nineteenth aspect, this application provides a computer-readable storage medium. The storage medium stores a computer program or instructions, and when the computer program or the instructions are executed by a computer, the method according to any one of the first aspect to the fourth aspect is implemented.

According to a twentieth aspect, this application provides a computer program product including instructions. The computer program product includes computer program code, and when the computer program code is run on a computer, the method according to any one of the first aspect to the fourth aspect is implemented.

### BRIEF DESCRIPTION OF DRAWINGS

FIG. 1 is a diagram of a network architecture in which an IAB node is inter-CU dual-connected;
FIG. 2 is a diagram of a network architecture of an IAB network;
FIG. 3(a) and FIG. 3(b) each are a diagram of a protocol stack according to an embodiment of this application;
FIG. 4 is a diagram of a mapping relationship according to an embodiment of this application;
FIG. 5 is a diagram of another mapping relationship according to an embodiment of this application;
FIG. 6 is a schematic flowchart of a communication method according to an embodiment of this application;
FIG. 7 is another schematic flowchart of a communication method according to an embodiment of this application;
FIG. 8 is a diagram of handover according to an embodiment of this application;
FIG. 9 is another schematic flowchart of a communication method according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of another communication apparatus according to an embodiment of this application.

### DESCRIPTION OF EMBODIMENTS

The following clearly and completely describes technical solutions in embodiments of this application with reference to the accompanying drawings in embodiments of this application.

In descriptions of this application, unless otherwise specified, "/" means "or". For example, A/B may represent A or B. A term "and/or" in this specification describes only an association relationship between associated objects and indicates that three relationships may exist. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the expression such as "example" or "for example" indicates an example, an instance, or descriptions. Any embodiment or design scheme described as an "example" or "for example" in this application should not be explained as being more preferred or having more advantages than another embodiment or design scheme. Exactly, use of the expression "example", "for example", or the like is intended to present a relative concept in a specific manner.

5th generation (5th generation, 5G) mobile communication imposes stricter requirements on various network performance indicators, for example, capacity improved by 1000 times, wider coverage requirements, ultra-high reliability and ultra-low latency. It is considered that high-frequency carrier frequency resources are abundant, high-frequency small cell networking becomes increasingly popular in hotspot areas to meet ultra-high capacity requirements of 5G. High-frequency carriers have poor propagation characteristics, severe attenuation due to blocking, and a small coverage area. Therefore, a large quantity of small cells need to be deployed intensively. Correspondingly, providing fiber backhaul for the large quantity of intensively deployed small cells causes high costs and has great difficulty in construction. Therefore, an economical and convenient backhaul solution is needed. In addition, from the perspective of wide coverage requirements, to provide network coverage in some remote areas, fiber deployment is difficult and has high costs. Therefore, a flexible and convenient access and backhaul solution is needed. An integrated access and backhaul (integrated access and backhaul, IAB) technology provides an idea to resolve the foregoing two problems. A wireless transmission solution is used for both an access link (access link) and a backhaul link (backhaul link) of the IAB technology. This reduces optical fiber deployment.

In consideration of a service transmission reliability requirement, an IAB node may be enabled to support dual connectivity (dual connectivity, DC) or multi-connectivity (multi-connectivity), to cope with an exception that may occur on a backhaul link, for example, an exception such as a link failure or blockage/congestion (blockage) or load fluctuation, so as to improve transmission reliability. In consideration of a small coverage area of a high frequency band, multi-hop networking may be used in the IAB network to ensure coverage performance of the network.

Because the IAB network supports multi-hop and multi-connectivity networking, there may be a plurality of transmission paths between a terminal device (for example, user equipment (user equipment, UE)) and an IAB donor (IAB donor) node. Each transmission path includes a plurality of nodes, and the plurality of nodes may include UE, one or more IAB nodes, and an IAB donor. If the IAB donor is in a form in which a central unit (central unit, CU) is separated from a distributed unit (distributed unit, DU), the IAB donor may include an IAB-donor-DU part (donor DU), an IAB-donor-CU (donor CU) part, and the like. In the IAB network, the IAB node (IAB node) may provide a wireless access service for the terminal device, and service data of the terminal device is transmitted by the IAB node to the IAB donor through a wireless backhaul link. The IAB node may have different names in different communication systems. For example, the IAB node may be referred to as a relay node (relay node, RN), or may be referred to as a wireless backhaul node or a wireless backhaul device. In a 5G system, the relay node may be referred to as an integrated access backhaul node (integrated access and backhaul node, IAB node). Certainly, in a future communication system, the relay node may further have different names. This is not limited herein. All IAB nodes mentioned in embodiments of this application may be replaced with relay nodes.

Each IAB node considers a neighboring node that provides a backhaul service for the IAB node as a parent node (or an upper-level node), and correspondingly, each IAB node may be considered as a child node (or a lower-level node) of the parent node of the IAB node. A wireless link used when an IAB node communicates with a child node of the IAB node is referred to as an access link, and includes an uplink transmission link and a downlink transmission link. Uplink transmission on the access link is also referred to as uplink transmission of the access link, and downlink transmission on the access link is also referred to as downlink transmission of the access link. A wireless link used when an IAB node communicates with a parent node of the IAB node may be referred to as a backhaul link, and includes an uplink transmission link and a downlink transmission link. Uplink transmission on the backhaul link is also referred to as uplink transmission of the backhaul link, and downlink transmission on the backhaul link is also referred to as downlink transmission of the backhaul link.

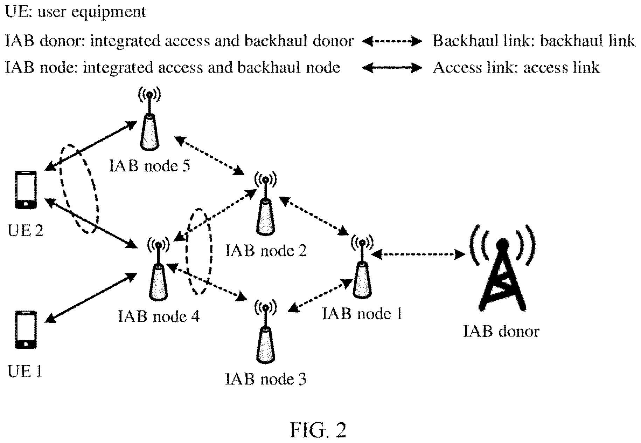

For example, FIG. 2 is a diagram of a network architecture of an IAB network. In a wireless relay scenario shown in FIG. 2, a parent node of a node 1 is a donor node (namely, an IAB donor), the node 1 is a parent node of a node 2 and a node 3, both the node 2 and the node 3 are parent nodes of a node 4, and a parent node of a node 5 is the node 2. There are two available paths for data transmission between UE 1 and the IAB donor. Path 1: UE 1-node 4-node 3-node 1-IAB donor. Path 2: UE 1-node 4-node 2-node 1-IAB donor. There are three available paths for data transmission between UE 2 and the IAB donor. Path 3: UE 2-node 4-node 3-node 1-IAB donor. Path 4: UE 2-node 4-node 2-node 1-IAB donor. Path 5: UE 2-node 5-node 2-node 1-IAB donor. An uplink data packet of each UE may be transmitted by one or more IAB nodes to the IAB donor, and then sent by the IAB donor to a mobile gateway device (for example, a user plane function (user plane function, UPF) network element in a 5G core network). A downlink data packet of each UE may be received by the IAB donor from the mobile gateway device, and then sent by the IAB donor to the UE.

The IAB node may include a mobile termination (mobile termination, MT) part and a distributed unit (distributed unit, DU) part. When the IAB node is oriented to a parent node of the IAB node (where the parent node of the IAB node may be another IAB node or the IAB donor), the IAB node may be considered as user equipment, namely, a role of an MT. When the IAB node is oriented to a child node of the IAB node (where the child node of the IAB node may be another IAB node or a terminal device), the IAB node may be considered as a network device, namely, a role of a DU, and is configured to provide a backhaul service for the child node.

The IAB donor may be an access network element having a complete access function, or may be an access network element in a form in which a CU is separated from a DU. The IAB donor may be connected to a core network (for example, a 5G core network (5G core, 5GC)) element that serves the terminal device, and also provides a wireless backhaul service for the IAB node. For ease of description, a central unit of the IAB donor is referred to as a donor CU for short (or directly referred to as a CU), and a distributed unit of the IAB donor is referred to as a donor DU for short. Alternatively, the donor CU may be in a form in which a control plane (control plane, CP) is separated from a user plane (user plane, UP). For example, the CU may include one CU-CP and one CU-UP (or more CU-UPs). In embodiments of this application, the IAB donor may also be referred to as an IAB donor, an IAB donor node, a donor node (donor node), or a donor gNodeB (donor gNodeB, DgNB). This is not limited in this application.

An IAB networking scenario shown in FIG. 2 is merely an example. In an IAB networking scenario in which multi-hop and multi-connectivity are combined, there are more other possibilities. For example, a DgNB and an IAB node served by another DgNB may form dual connectivity to serve UE. Details are not listed one by one herein in this application.

In this application, the donor gNodeB may include but is not limited to: a next generation NodeB (generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB or home NodeB), a transmission point (transmission and reception point or transmission point), a roadside unit (roadside unit, RSU) having a base station function, a baseband unit (baseband unit, BBU), a remote radio unit (remote radio unit, RRU), an active antenna unit (active antenna unit, AAU), one antenna panel or a group of antenna panels, a node having a base station function in a subsequent evolved system, or the like. The donor gNodeB may be an entity, and may further include a central unit (central unit, CU) entity and at least one distributed unit (distributed unit, DU) entity. An interface between the CU and the DU may be referred to as an F1 interface. Two ends of the F1 interface are respectively the CU and the DU. A peer end of the F1 interface of the CU is the DU, and a peer end of the F1 interface of the DU is the CU. The F1 interface may further include a control plane F 1 interface (F1-C) and a user plane F1 interface (F 1-U). In this application, the CU of the donor gNodeB may be referred to as a donor CU for short, and the DU of the donor gNodeB may be referred to as a donor DU for short.

In this application, a terminal is sometimes also referred to as user equipment (user equipment, UE), a mobile station, a terminal device, or the like. The terminal may be widely applied to various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, remote medical, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. The terminal may include but is not limited to: user equipment UE, a mobile station, a mobile device, a terminal device, a user agent, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device (such as a smartwatch, a smart band, and smart glasses), smart furniture or home appliances, a vehicle device in vehicle to everything (vehicle to everything, V2X), a terminal device having a relay function, customer premises equipment (customer premises equipment, CPE), an IAB node (specifically an MT of the IAB node or an IAB node serving as a terminal), and the like. A specific name and an implementation form of the terminal are not limited in this application.

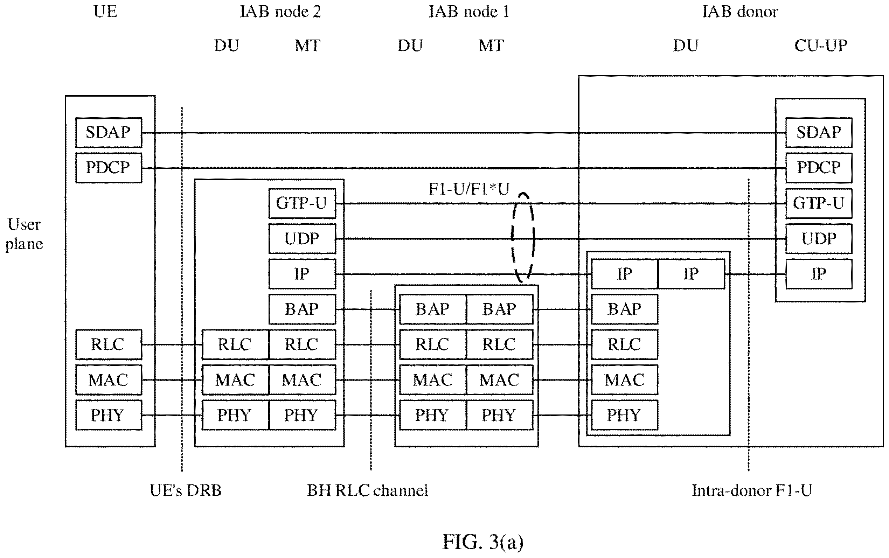

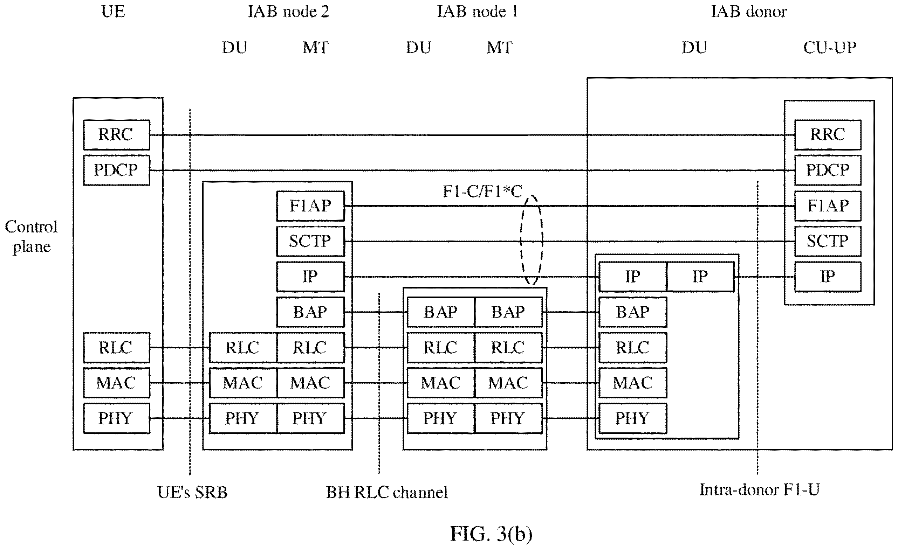

As shown in FIG. 3(a) and FIG. 3(b), in the current discussion of the IAB network, it is determined that a backhaul adaptation protocol (backhaul adaptation protocol, BAP) layer is introduced to a wireless backhaul link. The protocol layer may be an upper layer of a radio link control (radio link control, RLC) layer, and may be used to implement routing of a data packet on the wireless backhaul link, bearer mapping, and the like. The IAB-donor-CU allocates a unique BAP address to each IAB node controlled by the IAB-donor-CU. In this way, each IAB node in the network can be uniquely identified. In the case of a plurality of paths, each BAP address may be associated with a plurality of path IDs. A source node (an IAB-donor-DU in a downlink DL direction and an access IAB node in an uplink UL direction) will add, at a BAP layer of the source node, a BAP header to data packets that are being transmitted between the IAB-donor-DU and the access IAB node, and the BAP header includes a BAP address and a BAP path ID. Each IAB node will have a routing table (configured by the IAB-donor-CU) that is configured with an uplink UL and a downlink DL and that includes a next-hop identifier for each BAP path ID. Separate routing tables are reserved in the DL and UL directions. An IAB node DU uses a DL table, and an IAB node MT uses a UL table. The routing table may indicate to which child node (for the DL) or parent node (for the UL) the data packet is forwarded. When the access IAB node receives a data packet, the data packet is forwarded to a higher layer, and is processed in a same way of processing an incoming F1-U or F1-C data packet by a common DU. In addition to the routing function, the BAP protocol also performs a mapping between an ingress BH RLC channel and an egress BH RLC channel, and a mapping rule is configured by the IAB-donor-CU. For an intermediate IAB node, a mapping configuration is {input link ID, input BH RLC CH ID, output link ID, output BH RLC CH ID}. For an uplink mapping when the access IAB node sends an F1-U data packet, the mapping configuration is {destination IP address, TEID, output link ID, output BH RLC CH ID}. For a downlink mapping of the donor-DU, the mapping configuration is {destination IP address, DSCP (optional), IPv6 flow label (optional), output link ID, output BH RLC CH ID}.

An F1 interface (also referred to as an F1* interface, which may be uniformly referred to as the F1 interface in embodiments of this application, but a name is not limited) needs to be established between an IAB node (a DU part of the IAB) and an IAB donor (or a donor CU). The F1 interface supports a user plane protocol (F1-U/F1 *-U) and a control plane protocol (F1-C/F1*-C). The user plane protocol includes one or more of the following protocol layers: a general packet radio service (general packet radio service, GPRS) tunneling protocol user plane (GPRS tunneling protocol user plane, GTP-U) layer, a user datagram protocol (user datagram protocol, UDP) layer, and an internet protocol (internet protocol, IP) layer. The control plane protocol includes one or more of the following protocol layers: an F1 application protocol (F1 application protocol, F1AP) layer, a stream control transport protocol (stream control transport protocol, SCTP) layer, and the IP layer. Through a control plane of the F1 interface, interface management, donor DU management, UE context-related configuration, and the like may be performed between the IAB node and the IAB donor. Through a user plane of the F1 interface, functions such as user plane data transmission and downlink transmission status feedback may be performed between the IAB node and the IAB donor.

In the IAB network, a peer physical layer (physical layer, PHY), a peer MAC layer, and a peer radio link control (radio link control, RLC) layer of a terminal are on an access IAB node. A peer packet data convergence protocol (packet data convergence protocol, PDCP) layer, a peer service data adaptation protocol (service data adaptation protocol, SDAP) layer, and a peer radio resource control (radio resource control, RRC) layer of the terminal are on an IAB-donor-CU. If the IAB-donor-CU includes a CP and a UP, the peer RRC layer of the terminal is on the CP of the IAB-donor-CU (namely, the donor-CU-CP), and the peer PDCP layer and the peer SDAP layer of the terminal are on the UP of the IAB-donor-CU (namely, the donor-CU-UP).

FIG. 3(a) and FIG. 3(b) are respectively a diagram of a user plane protocol stack and a diagram of a control plane protocol stack in the IAB network according to an embodiment of this application. The following are described with reference to FIG. 3(a) and FIG. 3(b).

For the user plane, as shown in FIG. 3(a), a Uu interface is established between UE and an IAB node 2-DU (hereinafter referred to as IAB 2-DU for short), and peer protocol layers include RLC layers, MAC layers, and PHY layers. An F1-U interface is established between the IAB 2-DU and an IAB-donor-CU 1, and peer protocol layers include GTP-U layers, UDP layers, and IP layers. An F1 interface in the IAB donor is established between the IAB-donor-DU and the IAB-donor-CU, and peer protocol layers include IP layers, L2s, and L1s. In addition, peer SDAP layers and peer PDCP layers are established between the UE and the IAB-donor-CU, and peer IP layers are established between the IAB 2-DU and the IAB-donor-DU.

It can be learned that, compared with a user plane protocol stack of a single air interface, in the user plane protocol stack in the IAB network, a DU of an IAB access node implements a part of functions of a gNB-DU of the single air interface (namely, functions of establishing a peer RLC layer, a peer MAC layer, and a peer PHY layer of the terminal and establishing a peer GTP-U layer, a peer UDP layer, and a peer IP layer of the IAB-donor-CU). It may be understood that the DU of the IAB access node implements a function of the gNB-DU of the single air interface, and the IAB-donor-CU implements a function of a gNB-CU of the single air interface.

For the control plane, as shown in FIG. 3(b), the Uu interface is established between the UE and the IAB 2-DU, and peer protocol layers include RLC layers, MAC layers, and PHY layers. An F1-C interface is established between the IAB 2-DU and the IAB-donor-CU, and peer protocol layers include F1AP layers, SCTP layers, and IP layers. The F1 interface in the IAB donor is established between the IAB-donor-DU and the IAB-donor-CU, and peer protocol layers include IP layers, L2s, and L1s. In addition, peer RRC layers and peer PDCP layers are established between the UE and the IAB-donor-CU, and peer IP layers are established between the IAB-donor-DU and the IAB-donor-DU.

It can be learned that, compared with a control plane protocol stack of a single air interface, in the control plane protocol stack in the IAB network, a DU of an access IAB node implements functions of a gNB-DU of the single air interface (namely, functions of establishing a peer RLC layer, a peer MAC layer, and a peer PHY layer of the terminal and establishing a peer F1AP layer, a peer SCTP layer, and a peer IP layer of the CU). It may be understood that the DU of the access IAB node in the IAB network implements a function of the gNB-DU of the single air interface, and the IAB-donor-CU implements a function of a gNB-CU of the single air interface.

On the control plane, an RRC message is encapsulated in an F1AP message between the access IAB node and the IAB-donor-CU for transmission. For example, as shown in FIG. 3(a) and FIG. 3(b), a routing path of "UE-IAB node 2-IAB node 1-IAB donor" is used as an example. In an uplink direction, the UE may encapsulate the RRC message in a PDCP protocol data unit (protocol data unit, PDU) that is then sequentially processed by an RLC layer, a MAC layer, and a PHY layer and sent to the IAB 2-DU. The IAB 2-DU sequentially performs processing at a PHY layer, a MAC layer, and an RLC layer to obtain the PDCP PDU, encapsulates the PDCP PDU in the F1AP message, and sequentially performs processing at an SCTP layer and an IP layer to obtain a data packet. An IAB node 2-MT (IAB 2-MT for short) separately performs processing of the data packet at a BAP layer, an RLC layer, a MAC layer, and a PHY layer and sends the data packet to an IAB node 1-DU (IAB 1-DU for short). The IAB 1-DU sequentially performs processing at a PHY layer, a MAC layer, an RLC layer, and a BAP layer to obtain the data packet, and then an IAB node 1-MT (IAB 1-MT for short) sends the data packet to the IAB-donor-DU using an operation similar to that of the IAB 2-MT. After obtaining the data packet through parsing, the IAB-donor-DU sends the data packet to the IAB-donor-CU. The IAB-donor-CU sequentially performs processing of the data packet at the SCTP layer, the F1AP layer, and the PDCP layer to obtain the RRC message. Operations in a downlink direction are similar. Details are not described herein again.

On the control plane, a PDCP data packet is encapsulated in a GTP-U tunnel between the access IAB node and the IAB-donor-CU for transmission. The GTP-U tunnel is established on the F1-U interface.

To make embodiments of this application clearer, related technical features in embodiments of this application are explained and described below. It should be noted that these explanations are intended to make embodiments of this application easier to understand, but should not be considered as a limitation on the protection scope claimed in this application.

### (1) Access IAB node and intermediate IAB node

The access IAB node in embodiments of this application is an IAB node accessed by a terminal, and the intermediate IAB node is an IAB node between the access IAB node and a donor node.

For example, refer to FIG. 2. On the path "UE 1→IAB node 4→IAB node 3→IAB node 1→donor node", the IAB node 4 is an access IAB node, and the IAB node 3 and the IAB node 1 are intermediate IAB nodes. The IAB node 3 provides a backhaul service for the IAB node 4, and the IAB node 1 provides a backhaul service for the IAB node 3.

It should be noted that an IAB node is an access IAB node for a terminal that accesses the IAB node. For a terminal that accesses another IAB node, the IAB node is an intermediate IAB node. Therefore, whether the IAB node is specifically an access IAB node or an intermediate IAB node is not fixed and needs to be determined based on a specific application scenario.

### (2) Link, access link, and backhaul link

The link is a path between two neighboring nodes on a path.

The access link is a link accessed by a terminal, and may be a link between the terminal and an access network device, between the terminal and an IAB node, between the terminal and a donor node, or between the terminal and a donor DU. Alternatively, the access link includes a wireless link used in the case that an IAB node serves as a common terminal device to communicate with a parent node of the IAB node. In the case that the IAB node serves as the common terminal device, the IAB node does not provide a backhaul service for any child node. The access link includes an uplink access link and a downlink access link. In this application, an access link of the terminal is a wireless link. Therefore, the access link may also be referred to as a wireless access link.

The backhaul link is a link between an IAB node and a parent node in the case that the IAB node serves as a wireless backhaul node. In the case that the IAB node serves as the wireless backhaul node, the IAB node provides a wireless backhaul service for a child node. The backhaul link includes an uplink backhaul link and a downlink backhaul link. In this application, a backhaul link between an IAB node and a parent node is a wireless link. Therefore, the backhaul link may also be referred to as a wireless backhaul link.

### (3) Previous-hop node of a node, next-hop node of the node, ingress link (ingress link) of the node, and egress link (egress link) of the node

The previous-hop node of the node is a last node that is on a path including the node and that receives a data packet before the node.

The next-hop node of the node is a 1^{st} node that is on a path including the node and that receives a data packet after the node.

The ingress link of the node is a link between the node and the previous-hop node of the node (for example, the previous-hop node of the node may be a child node of the node) for uplink transmission, and may also be referred to as a previous-hop link of the node.

The egress link of the node is a link between the node and the next-hop node of the node (for example, the next-hop node of the node may be a parent node of the node) for uplink transmission, and may also be referred to as a next-hop link of the node.

Parent node and child node: Each IAB node considers a node that provides a wireless access service and/or a wireless backhaul service for the IAB node as a parent node (parent node). Correspondingly, each IAB node may be considered as a child node (child node) of the parent node of the IAB node. Alternatively, the child node may also be referred to as a lower-level node, and the parent node may also be referred to as an upper-level node.

### 4. Data packet

The data packet may be a data packet in a radio bearer (radio bearer, RB). The RB may be a data radio bearer (data radio bearer, DRB), and it may be understood that the data packet is a user plane data packet. The RB may alternatively be a signaling radio bearer (signaling radio bearer, SRB), and it may be understood that the data packet is a control plane data packet. Alternatively, the data packet may be a service operation, administration and maintenance (operation, administration and maintenance, OAM) data packet, and it may be understood that the data packet is a management plane data packet.

### (5) Mapping relationships among an RLC channel, an LCH, and a protocol entity

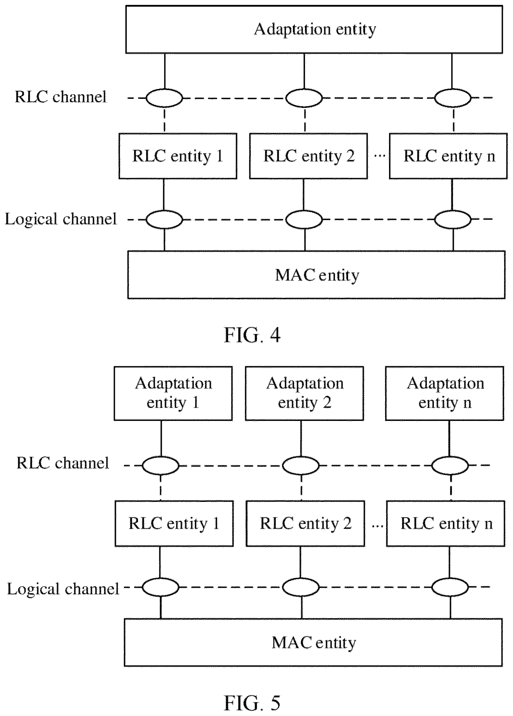

FIG. 4 and FIG. 5 each are a diagram of mapping relationships among an RLC channel, an LCH, and a protocol entity. As shown in FIG. 4 or FIG. 5, the RLC CH is a channel between an RLC entity and an upper-layer protocol entity of the RLC entity. For example, if the upper layer of the RLC entity is a PDCP entity, an RLC CH on a backhaul link is a channel between the RLC entity and the PDCP entity. For another example, if the upper layer of the RLC entity is a BAP layer entity, an RLC CH on a backhaul link is a channel between the RLC entity and the BAP entity. Therefore, the definition of the RLC CH specifically depends on the upper-layer protocol entity of the RLC entity.

The logical channel is a channel between the RLC entity and a lower-layer protocol entity of the RLC entity. For example, the lower layer of the RLC entity is a MAC layer, and the logical channel is a channel between the RLC entity and a MAC entity.

An RLC CH of an IAB node is in a one-to-one correspondence with an RLC entity and an RLC bearer.

A relationship between the BAP entity and the RLC entity may be that one BAP entity corresponds to a plurality of RLC entities, as shown in FIG. 4, or may be that one BAP entity corresponds to one RLC entity, as shown in FIG. 5. This is not limited in this application.

In addition, a BAP layer has one or more of the following capabilities: adding, to a data packet, routing information (routing information) identifiable by a wireless backhaul node (IAB node); performing route selection based on the routing information identifiable by the wireless backhaul node; adding, to the data packet, identification information that is related to a quality of service (quality of service, QoS) requirement and identifiable by the wireless backhaul node; performing, for the data packet, QoS mapping on a plurality of links including the wireless backhaul node, adding data packet type indication information to the data packet; and sending traffic control feedback information to a node that has a traffic control capability. It should be noted that a protocol layer having these capabilities is not necessarily named as the BAP layer, and may also have another name. A person skilled in the art may understand that any protocol layer having these capabilities may be understood as the BAP layer in embodiments of this application. An RLC CH on a BH link may be understood as a service differentiation channel on a BH link between two nodes, and the service differentiation channel may ensure specific quality of service QoS for data packet transmission. The RLC CH on the BH link may be understood as a logical concept rather than a concept of a physical channel.

Specifically, the RLC CH on the BH link may be understood as a peer RLC CH of two IAB nodes on the BH link. For example, in FIG. 2, the donor node has an RLC CH 1 and an RLC CH 2, and the node 1 has an RLC CH 1 and an RLC CH 2. An RLC entity of the RLC CH 1 of the donor node and an RLC entity of the RLC CH 1 of the node 1 are peer (peer) RLC entities. An RLC entity of the RLC CH 2 of the donor node and an RLC entity of the RLC CH 1 of the node 1 are peer (peer) RLC entities. It may be further understood that the RLC CH 1 of the donor node is a peer of the RLC CH 1 of the node 1, the RLC CH 2 of the donor node is a peer of the RLC CH 2 of the node 1, the RLC CH 1 of a BH link between the donor node DU and the node 1 may be the RLC CH 1 of the donor node and the RLC CH 1 of the node 1, and the RLC CH 2 of the BH link between the donor node DU and the node 1 may be the RLC CH 2 of the donor node and the RLC CH 2 of the node 1.

Because the RLC CH, the RLC bearer, and the logical channel are in a one-to-one correspondence, in embodiments of this application, the three descriptions may be replaced with each other. For example, in embodiments of this application, the RLC CH may be replaced with the RLC bearer or the logical channel. Similarly, an RLC bearer on a BH link may also be referred to as a BH bearer or a BH link bearer. Therefore, an RLC CH on the BH link may be replaced with the RLC bearer on the BH link, a logical channel on the BH link, the BH bearer, or the BH link bearer.

### (6) Egress RLC CH and ingress RLC CH

The egress RLC CH is an RLC CH between an IAB node and a parent node of the IAB node.

The ingress RLC CH is an RLC CH between the IAB node and a child node of the IAB node.

There may be a mapping relationship between the egress RLC CH and the ingress RLC CH. Uplink data received by the IAB node from the ingress RLC CH may be sent to a next IAB node (namely, the parent node of the IAB node) through the egress RLC CH to which the ingress RLC CH is mapped.

### 7. Quality of service (quality of service, QoS) and tunnel endpoint identifier (tunnel endpoint identifier, TEID)

Usually, the QoS can be implemented by one or a group of F1-U tunnels, and the TEID uniquely identifies an F1-U tunnel.

### 8. Boundary node (boundary node), child node (descendant node) of the boundary node, and parent node (ancestor node) of the boundary node

In embodiments of this application, the boundary node is an IAB node operating in a dual connectivity state, the child node of the boundary node is a downstream node of the boundary node, and the parent node of the boundary node is an upstream node of the boundary node. The parent node may also be referred to as an ancestor node or the like. This is not limited herein. For example, in FIG. 1 (in the figure, the IAB node is represented as an MT part and a DU part, and the IAB donor is represented as a CU part and a donor-DU part), the IAB node 2 is a boundary node, the IAB node 4 is a descendant node, the IAB node 1 is an MN related ancestor node, and the IAB node 3 is an SN related ancestor node. In the following description, the IAB DU represents a DU part of the IAB node, and the donor DU represents a DU part of the IAB donor.

### 9. Master node (master node, MN) and secondary node (secondary node, SN)

An IAB donor to which a CU having an F 1 interface with a DU part of a boundary node belongs is referred to as a master node (master node, MN), and an IAB donor to which a CU having no F1 interface with the DU part of the boundary node belongs is referred to as a secondary node (secondary node, SN). Information is transferred between the master node and the secondary node through an Xn interface.

It should be noted that, in the architecture of the communication system to which embodiments of this application are applicable shown in FIG. 1, the IAB node is allowed to be dual-connected to different IAB-donor-CUs. As shown in FIG. 1, a CU 1 is an MN CU, and a CU 2 is an SN CU. When the CU 1 establishes traffic passing through the secondary topology, the CU 1 needs to send a QoS list to the CU 2 through the Xn interface, to notify the CU 2 of QoS information of the traffic passing through the secondary topology. The CU 2 configures resources in the secondary topology node to meet these QoS requirements. For non-user plane traffic (non-UP traffic), each index in the QoS list indicates a service type (UE-associated F1AP/non-UE-associated F1AP/non-F1). For user plane traffic (UP traffic), each index in the QoS list indicates one or more F1-U tunnels that implement the QoS requirement. A TEID of each F1-U tunnel of the CU 2 may be known (the CU 1 notifies the CU 2) or unknown (the CU 1 does not notify the CU 2).

A set of the master node and an IAB node having an F1 interface with the CU in the master node is referred to as a master topology, and a set of the secondary node and an IAB node having an F1 interface with the CU in the secondary node is referred to as a secondary topology. As shown in FIG. 1, the CU 1, the donor DU 1, the IAB node 1, the IAB node 2, and the IAB node 4 form a master topology, and the CU 2, the donor DU 2, and the IAB node 3 form a secondary topology. It should be noted that, in the system architecture shown in FIG. 1, traffic control in the master topology is controlled by the CU 1, and traffic control in the secondary topology is controlled by the CU 2. When an IAB node finds that congestion occurs in a topology (for example, the master topology or the secondary topology) or signal quality of a serving cell is poor, the IAB node reports a status indication message only to a node (the CU 1 or the CU 2) associated with the IAB node, and the status indication message is used to trigger a node receiving the message to perform traffic control. For example, when the IAB node 2 or the IAB node 4 finds congestion or poor signal quality of a serving cell, the IAB node 2 and the IAB node 4 send only a status indication message to the CU 1. For another example, when the IAB node 3 finds congestion or poor signal quality of a serving cell, the IAB node 3 sends only a status indication message to the CU 2. As a result, traffic control in an inter-CU dual connectivity network architecture cannot be implemented.

Based on this, embodiments of this application provide a communication method. In a scenario in which an IAB node is dual-connected to different IAB-donor-CUs, inter-CU resource reconfiguration can be supported, to implement inter-CU traffic control.

It should be noted that reconfiguration in embodiments of this application may also be described as deletion, release, configuration, modification, or the like. This is not limited in embodiments of this application. In embodiments of this application, traffic control may also be described as traffic release, traffic revoking, or the like. This is not limited herein.

The following describes in detail the communication method and the communication apparatus provided in this application.

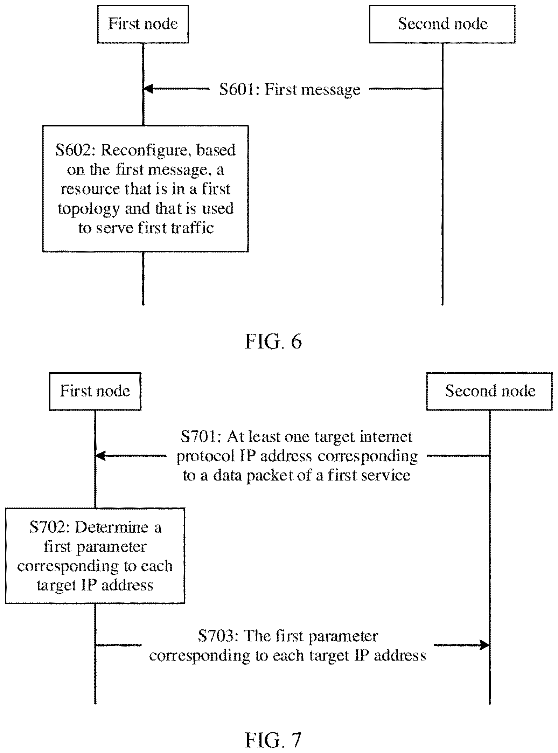

FIG. 6 is a schematic flowchart of a communication method according to an embodiment of this application. As shown in FIG. 6, the communication method includes the following steps S601 and S602.

S601: A first node receives a first message from a second node.

In some feasible implementations, the second node sends a first message to the first node, and correspondingly, the first node receives the first message from the second node, where the first message indicates to reconfigure a resource that is in a first topology and that is used to serve first traffic, the first topology is a topology controlled by the first node, and the first traffic is traffic of a third node or traffic of a downstream node of the third node. The third node is a boundary node. In the system architecture shown in FIG. 1, the third node is an IAB node 2.

Generally, when a fourth node finds congestion based on implementation of the fourth node (for example, when a DU part of the fourth node determines that buffer load (buffer load) of the fourth node is greater than or equal to a preset threshold) or poor signal quality of a serving cell (for example, when an MT part of the fourth node finds, through radio resource management (radio resource management, RRM) measurement, that signal quality of the serving cell is less than or equal to a preset signal quality threshold), the fourth node may send the second message to the second node. The second message may alternatively be referred to as a status indication message, and the status indication message may include a gNodeB-distributed unit status indication (gNB-DU Status Indication) message, an RRC message, or the like. This is not limited herein. The second message is used to report a location at which congestion or poor signal quality occurs. For example, the second message may include a backhaul link BH link identifier, a backhaul radio link control channel identifier (backhaul RLC channel identifier, BH RLC CH ID), or the like. Therefore, the second node receiving the second message may generate the first message based on the second message. Specifically, when the DU part of the fourth node finds congestion based on implementation of the DU part of the fourth node, the DU part of the fourth node may send, to the second node, the gNB-DU status indication message carrying the BH link or the RLC CH ID, that is, the second message is the gNB-DU status indication message. When the MT part of the fourth node finds, through RRM measurement, that signal quality of the serving cell is poor, the MT part of the fourth node may send, to the second node, an RRC message carrying the BH link or the RLC CH ID, that is, the second message is an RRC message. The second node receives the second message from the fourth node, and then the second node may generate the first message based on the second message, and send the first message to the first node. Usually, the second node may send the first message to the first node through an Xn interface, that is, the first message is an Xn message.

The fourth node may be an IAB node in the network architecture, for example, the fourth node and the third node may be a same node, that is, the fourth node is a boundary node, for example, the IAB node 2 in the system architecture diagram shown in FIG. 1; or the fourth node is a child node of the boundary node (or referred to as a downstream node of the boundary node), for example, the IAB node 4 in the system architecture diagram shown in FIG. 1; or the fourth node is a secondary ancestor node of the boundary node, for example, the IAB node 3 in the system architecture diagram shown in FIG. 1. This is not limited herein. The solutions provided in this application are separately described in detail subsequently for different fourth nodes.

There is an RRC connection between the third node (or described as an MT part of the third node) and each of the first node and the second node, there is an F1 connection between the third node (or described as a DU part of the third node) and the second node, the first node is a central unit CU in a first IAB donor node, and the second node is a central unit CU in a second IAB donor node. In other words, the third node is dual-connected to the first node and the second node, or it is described as follows: The first node is a central unit CU in the first IAB donor node in a dual connectivity mode, and the second node is a central unit CU in the second IAB donor node in the dual connectivity mode. The first IAB donor node may be a secondary IAB donor node in a dual connectivity mode, and the second IAB donor node may be a master IAB donor node in the dual connectivity mode. Alternatively, the first IAB donor node may be a master IAB donor node in a dual connectivity mode, and the second IAB donor node may be a secondary IAB donor node in the dual connectivity mode. In other words, in a possible implementation, the first node is a CU in a secondary IAB donor node in a dual connectivity mode, and the second node is a CU in a master IAB donor node in the dual connectivity mode. In another implementation, the first node is a CU in a master IAB donor node in a dual connectivity mode, and the second node is a CU in a secondary IAB donor node in the dual connectivity mode.

When the first node is the CU in the secondary IAB donor node in the dual connectivity mode, and the second node is the CU in the master IAB donor node in the dual connectivity mode, the first topology is a secondary topology, that is, the first message indicates to reconfigure a resource that is in the secondary topology and that is used to serve the first traffic. When the first node is the CU in the master IAB donor node in the dual connectivity mode, and the second node is the CU in the secondary IAB donor node in the dual connectivity mode, the first topology is a master topology, that is, the first message indicates to revoke a resource that is in the master topology and that is used to serve the first traffic. The following separately describes the two cases in detail.

In an implementation, when the first node is the CU in the secondary IAB donor node in the dual connectivity mode, and the second node is the CU in the master IAB donor node in the dual connectivity mode, the first node may determine, based on the received second message from the fourth node, the resource that is in the first topology and that needs to be reconfigured and that is used to serve the first traffic. The fourth node may be a boundary node, or the fourth node may be a child node of the boundary node, or the fourth node is an ancestor node related to the master node. For example, the system architecture shown in FIG. 1 is used as an example. The first node may be a CU 2 shown in FIG. 1, the second node may be a CU 1 shown in FIG. 1, and the fourth node may be a boundary node IAB node 2 (that is, an IAB MT 2 and an IAB DU 2) shown in FIG. 1; or the fourth node may be a child node IAB node 4 (that is, an IAB MT 4 and an IAB DU 4) of the boundary node shown in FIG. 1. The fourth node may be an ancestor node IAB node 1 (that is, IAB MT 1 and IAB DU 1) related to the master node shown in FIG. 1.

In another implementation, when the first node is the CU in the master IAB donor node in the dual connectivity mode, and the second node is the CU in the secondary IAB donor node in the dual connectivity mode, the first node may determine, based on the second message received from the third IAB node, to-be-revoked service traffic carried in the first topology. Specifically, the fourth node may be an ancestor node related to the secondary node. For example, the system architecture shown in FIG. 1 is also used as an example. The first node may be a CU 2 shown in FIG. 1, the second node may be a CU 1 shown in FIG. 1, and the fourth node may be an ancestor node IAB node 3 (that is, an IAB MT 3 and an IAB DU 3) related to the secondary node shown in FIG. 1.

S602: The first node reconfigures, based on the first message, the resource that is in the first topology and that is used to serve the first traffic.

In some feasible implementations, the first node may reconfigure, based on the first message, the resource that is in the first topology and that is used to serve the first traffic. Herein, the reconfiguring, based on the first message, the resource that is in the first topology and that is used to serve the first traffic may be understood as: deleting, based on the first message, the resource that is in the first topology and that is used to serve the first traffic. Optionally, the first node may further send a first feedback of the first message to the second node, where the first feedback is used to trigger the second node to reconfigure a resource that is in a second topology and that is used to serve the first traffic, and the second topology is a topology controlled by the second node.

Usually, the first message includes at least one of the following information: indication information for reconfiguring all resources for the first traffic, a resource corresponding to a quality of service index (QoS indexes) in the resource for the first traffic, and a resource corresponding to a tunnel endpoint identifier TEID in the resource for the first traffic. In other words, the first node performs resource deletion, resource reconfiguration, or resource release at different granularities based on different content included in the first message, to implement traffic release, traffic control, or traffic revoking at different granularities.

Optionally, the first message may further include first indication information, and the first indication information indicates a traffic control trigger reason. Specifically, the traffic control trigger reason includes that congestion occurs or signal quality does not meet a quality requirement. For example, when a length of the first indication information may be 1 bit, and a value of the first indication information is 1, it indicates that the traffic control trigger reason is that congestion occurs; or when a value of the first indication information is 0, it indicates that the traffic control trigger reason is that signal quality does not meet a quality requirement; or vice versa. This is not limited herein. For another example, when a length of the first indication information may be 2 bits, and a value of the first indication information is 10, it indicates that the traffic control trigger reason is that congestion occurs; or when a value of the first indication information is 01, it indicates that the traffic control trigger reason is that signal quality does not meet a quality requirement; or vice versa. This is not limited herein.

In a possible implementation, when the first message includes the indication information for reconfiguring all the resources of the first traffic, the first node may delete all resources that are in the first topology and that are used to serve the first traffic. Correspondingly, the second node may delete all resources that are in the second topology and that are used to serve the first traffic, to release all the resources used to serve the first traffic. Specifically, ① when the first node is the CU in the secondary IAB donor node in the dual connectivity mode, and the second node is the CU in the master IAB donor node in the dual connectivity mode, the second node may notify, via an F1AP, a master topology node (for example, a boundary node, and/or a descendant node, and/or an ancestor node related to the master node) of releasing of all traffic that is in a QoS list and that passes through the secondary topology, and the first node may notify, via the F1AP, a secondary topology node (for example, an ancestor node related to the secondary node) of releasing of all the traffic that is in the QoS list and that passes through the secondary topology. ② When the first node is the CU in the master IAB donor node in the dual connectivity mode, and the second node is the CU in the secondary IAB donor node in the dual connectivity mode, the first node may notify, via an F1AP, a master topology node (for example, a boundary node, and/or a descendant node, and/or an ancestor node related to the master node) of releasing of all traffic that is in a QoS list and that passes through the master topology, and the second node may notify, via the F1AP, a secondary topology node (for example, an ancestor node related to the secondary node) of releasing of all the traffic that is in the QoS list and that passes through the master topology.

It should be noted that the QoS list in this embodiment of this application may be understood as a QoS list sent by the MN CU (for example, the CU 1 in FIG. 1) to the SN CU (for example, the CU 2 in FIG. 1) through an Xn interface when the MN CU establishes the traffic passing through the secondary topology. The QoS list is used to notify the SN CU of QoS information of the traffic passing through the secondary topology. Based on this, the SN CU may configure a resource in the secondary topology node to meet a QoS requirement in the QoS list.

In a possible implementation, when the first message includes the quality of service index (QoS indexes), the first node may delete a resource that is in the first topology and that corresponds to the quality of service index. Correspondingly, the second node may delete a resource that is in the second topology and that corresponds to the quality of service index, to release some resources used to serve the first traffic. Specifically, ① in the case that the first node is the CU in the secondary IAB donor node in the dual connectivity mode, and the second node is the CU in the master IAB donor node in the dual connectivity mode, the second node may notify, via an F1AP, a master topology node (for example, a boundary node, and/or a descendant node, and/or an ancestor node related to the master node) of releasing of QoS indexes that pass through the secondary topology and that need to be released in the QoS list, and the first node may notify, via the F1AP, a secondary topology node (for example, an ancestor node related to the secondary node) of releasing of QoS indexes that pass through the secondary topology and that need to be released in the QoS list. ② In the case that the first node is the CU in the master IAB donor node in the dual connectivity mode, and the second node is the CU in the secondary IAB donor node in the dual connectivity mode, the first node may notify, via an F1AP, a master topology node (for example, a boundary node, and/or a descendant node, and/or an ancestor node related to the master node) of releasing of QoS indexes that pass through the master topology and that need to be released in the QoS list, and the second node may notify, via the F1AP, a secondary topology node (for example, an ancestor node related to the secondary node) of releasing of QoS indexes that pass through the master topology and that need to be released in the QoS list.

In the case of performing traffic release at a granularity of all traffic or at a minimum granularity of QoS, releasing traffic may be understood as deleting, from the node (a master topology node or a secondary topology node), an RLC CH newly established to meet a QoS requirement in the QoS list or deleting a mapping relationship between a QoS requirement and an RLC CH.

For example, the system architecture shown in FIG. 1 is used as an example. It is assumed that the first node is a CU 2, and the second node is a CU 1. It is assumed that when the CU 1 establishes traffic passing through the secondary topology, a QoS list sent by the CU 1 to the CU 2 through an Xn interface includes a QoS index 1 corresponding to a service type 1, a QoS index 2 corresponding to a service type 2, and a QoS index 3 corresponding to a service type 3. In a traffic transmission process, the CU 2 receives first information from the CU 1. The first information includes the QoS index 1. Therefore, the CU 2 may notify the donor DU 2 and the IAB node 3 (that is, the IAB MT 3 and the IAB DU 3) of releasing of traffic corresponding to the QoS index 1, and the CU 1 may notify the donor DU 1, the IAB node 1 (that is, the IAB MT 1 and the IAB DU 1), the IAB node 2 (that is, the IAB MT 2 and the IAB DU 2) and the IAB node 4 (that is, the IAB MT 4 and the IAB DU 4) of releasing of traffic corresponding to the QoS index 1.

In a possible implementation, when the first message includes the TEID, the first node may delete a resource (namely, the F1-U tunnel) that is in the first topology and that corresponds to the TEID. Correspondingly, the second node may delete a resource (namely, the F1-U tunnel) that is in the second topology and that corresponds to the TEID, to release some resources used to serve the first traffic. Specifically, ① in the case that the first node is the CU in the secondary IAB donor node in the dual connectivity mode, and the second node is the CU in the master IAB donor node in the dual connectivity mode, the second node may notify, via an F1AP, a master topology node (for example, a boundary node, and/or a descendant node, and/or an ancestor node related to the master node) of releasing of a selected resource in the F1-U tunnel, and the first node may notify, via the F1AP, a secondary topology node (for example, an ancestor node related to the secondary node) of releasing of the selected resource in the F1-U tunnel. ② In the case that the first node is the CU in the master IAB donor node in the dual connectivity mode, and the second node is the CU in the secondary IAB donor node in the dual connectivity mode, the first node may notify, via an F1AP, a master topology node (for example, a boundary node, and/or a descendant node, and/or an ancestor node related to the master node) of releasing of a selected resource in the F1-U tunnel, and the second node may notify, via the F1AP, a secondary topology node (for example, an ancestor node related to the secondary node) of releasing of a selected resource in the F1-U tunnel.

In the case of performing traffic release at a minimum granularity of the F1-U tunnel, releasing traffic may be understood as deleting, from the node (a master topology node or a secondary topology node), an RLC CH that is in the F1-U tunnel and that corresponds to the TEID. It should be noted that when the first message includes the TEID, the CU in the master node needs to notify the CU in the secondary node of all TEIDs passing through the secondary topology when the CU in the master node establishes traffic passing through the secondary topology.

For example, the system architecture shown in FIG. 1 is used as an example. It is assumed that the first node is a CU 2, and the second node is a CU 1. It is assumed that when the CU 1 establishes traffic passing through the secondary topology, the CU 1 sends, to the CU 2 through the Xn interface, all TEIDs passing through the secondary topology are respectively a TEID 1, a TEID 2, a TEID 3, a TEID 4, and a TEID 5. In a traffic transmission process, the CU 2 receives first information from the CU 1. The first information includes a TEID 2 and a TEID 3. Therefore, the CU 2 may notify the donor DU 2 and the IAB node 3 (that is, the IAB MT 3 and the LAB DU 3) of releasing of traffic corresponding to the TEID 2 and the TEID 3, and the CU 1 may notify the donor DU 1, the IAB node 1 (that is, the IAB MT 1 and the IAB DU 1), the IAB node 2 (that is, the IAB MT 2 and the IAB DU 2) and the IAB node 4 (that is, the IAB MT 4 and the IAB DU 4) of releasing of traffic corresponding to the TEID 2 and the TEID 3.

Optionally, in some feasible implementations, release triggered by the secondary topology node may be re-established in the master topology, and whether re-establishment of release triggered by the master topology node is allowed depends on a network element that triggers traffic release. For example, in the system architecture shown in FIG. 1, for release triggered by poor signal quality of a serving cell reported by the IAB MT 2 (which may be determined based on the first indication information), the traffic can be re-established in the master topology (for example, an RLC CH is established or an F1-U tunnel is re-established based on QoS requirements). Congestion or poor signal quality found by the IAB DU 2 or the IAB node 4 can be alleviated only by releasing traffic, and re-establishment is not supported in the master topology.

In this embodiment of this application, for a scenario in which an IAB node is dual-connected to different IAB-donor-CUs, an inter-CU traffic control method supporting various resource granularities is provided. Specifically, when the second node determines that congestion or poor signal quality occurs in the first topology in which the second node is located, the second node may send the first message to the first node. The first message indicates to reconfigure the resource that is in the first topology and that is used to serve the first traffic. Therefore, the first node and the second node may separately delete, based on an indication of the first message, a resource that is carried in a topology corresponding to the first node and that is used to serve the first traffic. The resource reconfiguration granularity in this embodiment of this application includes reconfiguration of all resources, inter-CU resource reconfiguration at a granularity of a QoS index, and inter-CU resource reconfiguration at a granularity of an F1-U tunnel. Alternatively, the traffic control granularity in this embodiment of this application includes releasing of all traffic, inter-CU traffic releasing at a granularity of a QoS index, and inter-CU traffic releasing at a granularity of an F1-U tunnel.

It should be noted that, for the network architecture in which the IAB node is dual-connected to different IAB-donor-CUs shown in FIG. 1, the donor DU 2 needs to perform downlink RLC CH mapping based on a target IP address, an IPv6 flow label, and a differentiated services code point (Differentiated Services Code Point, DSCP), where the target IP address, the IPv6 flow label, the DSCP all need to be included in an IP header, and the CU 1 writes the information into the IP header. The DSCP and the IPv6 flow label reflect a QoS requirement of a service, and have a mapping relationship with the target IP address. In the donor DU 2, the mapping relationship is configured by the IAB-donor-CU 2. Therefore, this application further provides a communication method. The method can resolve a mapping configuration problem of an RLC CH in the network architecture shown in FIG. 1. The following specifically describes, with reference to FIG. 6, how to feed back the mapping relationship to the CU 1, so that the CU 1 writes the information into the IP header.

FIG. 7 is another schematic flowchart of a communication method according to an embodiment of this application. It should be noted that in this embodiment of this application, the first node is a central unit CU in a secondary IAB donor node in a dual connectivity mode, and the second node is a central unit CU in a master IAB donor node in the dual connectivity mode. As shown in FIG. 7, the communication method includes the following steps S701 to S703.

S701: A first node receives, from a second node, at least one target internet protocol IP address corresponding to a data packet of a first service.

In some feasible implementations, the second node sends, to the first node, the at least one target internet protocol (internet protocol, IP) address corresponding to the data packet of the first service. Correspondingly, the first node receives, from the second node, the at least one target IP address corresponding to the data packet of the first service. The first node and the second node may communicate with each other through an Xn interface. In other words, the second node may send the target IP address of the downlink data packet to the first node through the Xn interface.

S702: The first node determines a first parameter corresponding to each target IP address.

In some feasible implementations, the first node determines the first parameter corresponding to each target IP address. In other words, the first node may configure the first parameter corresponding to each target IP address. The target IP address may be an IPv4 address or an IPv6 address.

S703: The first node sends, to the second node, the first parameter corresponding to each target IP address.

In some feasible implementations, the first node sends, to the second node, the first parameter corresponding to each target IP address. When the target IP address is an IPv4 address, the first parameter includes a DSCP. When the target IP address is an IPv6 address, the first parameter includes a DSCP and an IPv6 flow label (IPv6 flow label). For ease of understanding, an example in which the target IP address is an IPv6 address and the first parameter includes a DSCP and an IPv6 flow label is used below for description.

In a possible implementation, when one target IP address corresponds to one first parameter, the sending, to the second node, the first parameter corresponding to each target IP address may be understood as: sending, to the second node based on a receiving order of the at least one target IP address, the first parameter corresponding to each target IP address; or sending a 1:1 mapping relationship between the first parameter and each target IP address to the second node. In other words, for 1: 1 mapping, the first node may sequentially arrange {DSCP, IPv6 flow label} according to a sequence of target IP addresses sent by the second node to the first node, and send the {DSCP, IPv6 flow label} to the second node through the Xn interface. For ease of understanding, an information element structure of 1:1 mapping in this sending manner may be represented as Table 1 below. Alternatively, for 1: 1 mapping, the first node may send the mapping relationship to the second node through the Xn interface in an arrangement manner of {DSCP, IPv6 flow label, IP}. For ease of understanding, an information element structure of 1:1 mapping in this sending manner may be represented as Table 2 below.

**Table 1**

| |
|---|
| IE name for 1:1 mapping (option 1) |
| DSCP |
| IPv6 flow label |

**Table 2**

| |
|---|
| IE name for 1:1 mapping (option 2) |
| DSCP |
| IPv6 flow label |
| IP address |

For example, the system architecture shown in FIG. 1 is used as an example. For 1: 1 mapping, it is assumed that target IP addresses sent by the CU 1 to the CU 2 include an IP address 1, an IP address 2, and an IP address 3, and the CU 1 sends these IP addresses to the CU 2 according to the following sequence: IP address 1→IP address 2→IP address 3. After receiving these IP addresses, the CU 2 may configure that the IP address 1 corresponds to the DSCP 1 and the IPv6 flow label 1, the IP address 2 corresponds to the DSCP 2 and the IPv6 flow label 2, and the IP address 3 corresponds to the DSCP 3 and the IPv6 flow label 3. In a possible implementation, the CU 2 may sequentially arrange {DSCP, IPv6 flow label} corresponding to the IP address 1, the IP address 2, and the IP address 3 according to a sequence of IP addresses sent by the CU 1 to the CU 2, and send the {DSCP, IPv6 flow label} to the CU 1 through the Xn interface. That is, the CU 2 sequentially sends, to the CU 1 according to a sequence of {DSCP 1, IPv6 flow label 1}→{DSCP 2, IPv6 flow label 2}→{DSCP 3, IPv6 flow label 3}, {DSCP, IPv6 flow label} corresponding to the IP address 1, the IP address 2, and the IP address 3. In another possible implementation, the CU 2 may send, in an arrangement manner of {DSCP, IPv6 flow label, IP address}, {DSCP, IPv6 flow label, IP address} respectively corresponding to the IP address 1, the IP address 2, and the IP address 3 to the CU 1 through the Xn interface. That is, the CU 2 sends {DSCP 1, IPv6 flow label 1, IP address 1}, {DSCP 2, IPv6 flow label 2, IP address 2}, and the {DSCP 3, IPv6 flow label 3, IP address 3} to the CU 1. It may be understood that in this implementation, a sending sequence is not limited. For example, the CU 2 may send {DSCP, IPv6 flow label, IP address} according to a sequence of {DSCP 1, IPv6 flow label 1, IP address 1}→{DSCP 2, IPv6 flow label 2, IP address 2}→{DSCP 3, IPv6 flow label 3, IP address 3}. For another example, the CU 2 may send {DSCP, IPv6 flow label, IP address} according to a sequence of {DSCP 2, IPv6 flow label 2, IP address 2}→{DSCP 1, IPv6 flow label 1, IP address 1}→{DSCP 3, IPv6 flow label 3, IP address 3}. For another example, the CU 2 may send {DSCP, IPv6 flow label, IP address} according to a sequence of the {DSCP 2, IPv6 flow label 2, IP address 2}→{DSCP 3, IPv6 flow label 3, IP address 3}→{DSCP 1, IPv6 flow label 1, IP address 1}, and the like. This is not limited herein.

In another possible implementation, when one target IP address corresponds to a plurality of first parameters, the sending, to the second node, the first parameter corresponding to each target IP address may be understood as: sending, to the second node based on a receiving order of the at least one target IP address, the first parameter corresponding to each target IP address; or sending, to the second node, a 1:N mapping relationship between the first parameter and the plurality of target IP addresses. That is, for 1:N mapping, the first node may sequentially arrange {DSCP, IPv6 flow label} according to a sequence of target IP addresses sent by the second node to the first node, and send the {DSCP, IPv6 flow label} to the second node through the Xn interface (for an information element structure, refer to Table 1); or may express a mapping relationship in an arrangement manner of { {DSCP, IPv6 flow label}, {IP 1, ..., IP N}}, and send the mapping relationship to the second node through the Xn interface after matching {DSCP, IPv6 flow label} with a plurality of corresponding IP addresses, for ease of understanding, the information element structure of 1: 1 mapping in this sending manner may be represented as Table 3 below.

**Table 3**

| |
|---|
| IE name for 1:N mapping |
| DSCP |
| IPv6 flow label |
| IP address list |
| >IP address 1 |
| >IP address 2 |
| ... |
| >IP address N |

For example, the system architecture shown in FIG. 1 is used as an example. For 1:N mapping, it is assumed that target IP addresses sent by the CU 1 to the CU 2 include an IP address 1, an IP address 2, an IP address 3, and an IP address 4, and the CU 1 sends these IP addresses to the CU 2 according to a sequence of IP address 1→P address 2→IP address 3→IP address 4. After receiving these IP addresses, the CU 2 may configure that the IP address 1 corresponds to the DSCP 1 and the IPv6 flow label 1, the IP address 2 corresponds to the DSCP 1 and the IPv6 flow label 1, the IP address 3 corresponds to the DSCP 2 and the IPv6 flow label 2, and the IP address 4 corresponds to the DSCP 2 and the IPv6 flow label 2. In a possible implementation, the CU 2 may sequentially arrange {DSCP, IPv6 flow label} corresponding to the IP address 1, the IP address 2, the IP address 3, and the IP address 4 according to a sequence of IP addresses sent by the CU 1 to the CU 2, and send the {DSCP, IPv6 flow label} to the CU 1 through the Xn interface. That is, the CU 2 sequentially sends, to the CU 1 according to a sequence of {DSCP 1, IPv6 flow label 1}→{DSCP 1, IPv6 flow label 1}→{DSCP 2, IPv6 flow label 2}→{DSCP 2, IPv6 flow label 2}, {DSCP, IPv6 flow label} corresponding to the IP address 1, the IP address 2, the IP address 3, and the IP address 4. In another possible implementation, the CU 2 may send, in an arrangement manner of {{DSCP, IPv6 flow label}, {IP 1, ..., IP N}}, {DSCP, IPv6 flow label, IP address} respectively corresponding to the IP address 1, the IP address 2, and the IP address 3 to the CU 1 through the Xn interface. That is, the CU 2 sends {{DSCP 1, IPv6 flow label 1}, {IP address 1, IP address 2}}, {{DSCP 2, IPv6 flow label 2}, {IP address 3, IP address 4}} to the CU 1. It may be understood that in this implementation, a sending sequence is not limited. For example, the CU 2 may send {DSCP, IPv6 flow label, IP address} according to a sequence of {{DSCP 1, IPv6 flow label 1}, {IP address 1, IP address 2}}→{{DSCP 2, IPv6 flow label 2}, {IP address 3, IP address 4}}. For another example, the CU 2 may send {DSCP, IPv6 flow label, IP address} according to a sequence of {{DSCP 2, IPv6 flow label 2}, {IP address 3, IP address 4} }→{ {DSCP 1, IPv6 flow label 1}, {IP address 1, IP address 2}}. This is not limited herein.

It should be noted that, for each data packet, the second node may write the target IP address, the DSCP, and the IPv6 flow label into the IP header based on the mapping relationship, and finally send the data packet to the donor DU 2 for routing.

In this embodiment of this application, an inter-CU routing method is provided for a scenario in which an IAB node is dual-connected to different IAB-donor-CUs. Specifically, the second node obtains a mapping relationship between a DSCP, an IPv6 flow label, and a target IP address from the first node, so that the second node writes the mapping relationship into a packet header of the data packet, thereby ensuring correct inter-topology transmission of the data packet and improving communication reliability.

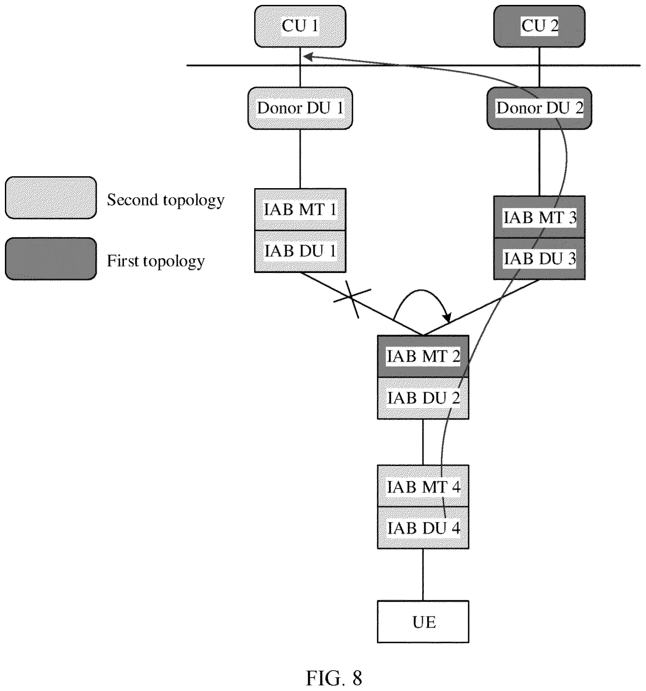

It should be noted that, in the discussion of the 3GPP Rel-17 standard, it is determined that a partial migration (partial migration) is used for migration of an IAB node between different donors, that is, an MT part of the IAB node that needs to be handed over is handed over to a DU of a target donor (a donor DU of the target donor or an IAB node DU controlled by the donor CU of target donor), the MT part of the IAB node is disconnected from a source donor, and an RRC connection is established between the IAB node and the CU of the target donor. However, a DU part of the IAB node is still controlled by the source CU, an F1 interface between the IAB node and the CU of the source donor is reserved, and no new F1 interface is established between the IAB node and the CU of the target donor. For example, FIG. 8 is a diagram of handover according to an embodiment of this application. As shown in FIG. 8, an IAB MT 2 maintains dual connectivity to a CU 1 and a CU 2 via an IAB DU 1 and an IAB DU 3. Sometimes, the IAB MT 2 is directly handed over to the IAB DU 3 and is disconnected from the IAB DU 1. However, in this case, the IAB DU 2 and an IAB DU 4 do not establish an F1AP with the CU 2 but still maintain an F1AP with the CU 1, to reduce overheads of F1AP reestablishment. This architecture is called partial migration. It may be understood that the IAB MT 2 is handed over to the IAB DU 3 controlled by the CU 2, and establishes an RRC connection to the CU 2. The IAB DU 2 is still controlled by the CU 1, and reserves an F1 interface between the IAB DU 2 and the CU 1. The F1 interface is implemented on a path " IAB node 2-1AB node 3→donor DU 2→CU 1".

It should be noted that, after partial migration occurs, a boundary/descendant node and the CU 1 can be connected only through a first topology. It is considered that when partial migration occurs, data may be being transmitted through a second topology. In this case, the IAB MT 2 is disconnected from the second topology, and inter-topology rerouting needs to be performed on the data being transmitted. Inter-topology rerouting includes BAP header rewriting. An old BAP routing ID in an input topology needs to be changed to a new BAP routing ID that can be identified in an output topology. FIG. 8 is used as an example, for the IAB node 2, data transmission between the IAB node 2 and the IAB node 3 and between the IAB node 2 and an IAB node 4 needs to be routed via a BAP. The IAB node 2 needs to learn a method for modifying a BAP routing ID, to change, during uplink transmission, the BAP routing ID from being identifiable in the second topology to being identifiable in the first topology.

Based on this, an embodiment of this application provides a communication method. The method can resolve a BAP header rewriting problem during rerouting in a partial migration (partial migration) scenario.

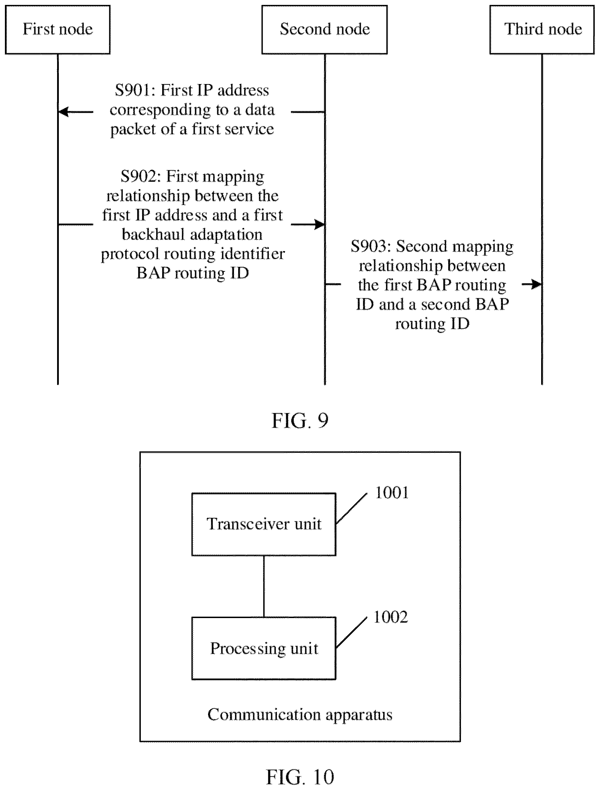

FIG. 9 is another schematic flowchart of a communication method according to an embodiment of this application. It should be noted that in this embodiment of this application, the first node is a central unit CU in a target IAB donor node of the third node, the second node is a central unit CU in a source IAB donor node of the third node, and the third node may be a DU of a boundary node. As shown in FIG. 9, the communication method includes the following steps S901 to S903.

S901: The second node sends, to the first node, a first IP address corresponding to a data packet of a first service.

In some feasible implementations, the second node obtains the first IP address, and sends the first IP address to the first node through an Xn interface. Correspondingly, the first node receives the first IP address from the second node through the Xn interface. The first IP address includes a source IP address. Specifically, the second node may obtain the source IP address of an uplink data packet based on a traffic context of a boundary node or a child node of the boundary node, and notify the first node of the source IP address through the Xn interface.

S902: The second node receives a first mapping relationship between the first IP address and a first backhaul adaptation protocol routing identifier BAP routing ID from the first node.

In some feasible implementations, for an uplink data packet, the first node may allocate a first backhaul adaptation protocol routing identifier (BAP routing ID) in a first topology to each data packet, and notify the second node of the first mapping relationship between the first BAP routing ID and the first IP address (that is, a source IP address of the uplink data packet) via an F1AP. Correspondingly, the second node receives the first mapping relationship between the first IP address and the first BAP routing ID from the first node.

S903: The second node sends a second mapping relationship between the first BAP routing ID and a second BAP routing ID to the third node.

In some feasible implementations, the second node sends the second mapping relationship between the first BAP routing ID and a second BAP routing ID to the third node, where the second mapping relationship is used to reroute the data packet of the first service. Specifically, the second node obtains a third mapping relationship between the first IP address and the second BAP routing ID, and determines the second mapping relationship based on the first mapping relationship and the third mapping relationship. Further, the second node sends the second mapping relationship between the first BAP routing ID and the second BAP routing ID to the third node, where the second mapping relationship is used to reroute the data packet of the first service. That is, the second node may use the first IP address as an intermediate variable based on the mapping relationship between the received IP address and the first BAP routing ID in the first topology and the mapping relationship between the IP address and the second BAP routing ID in a second topology that are originally known in the second node, to generate the mapping relationship between the second BAP routing ID in the second topology and the first BAP routing ID in the first topology. Further, the second node may send, to the DU of the third node via the F1AP, the second mapping relationship between the second BAP routing ID in the second topology and the first BAP routing ID in the first topology. Therefore, the DU of the third node can rewrite the BAP routing ID based on the second mapping relationship.

For example, an uplink data packet in the system architecture shown in FIG. 7 is used as an example. First, the CU 1 learns, based on a context of descendant traffic, that five IP addresses, namely, an IP address 1, an IP address 2, an IP address 3, an IP address 4, and an IP address 5, send data to the CU 1 before over the second topology, and now data sent by these IP addresses needs to be rerouted to the first topology. Therefore, the CU 1 notifies the CU 2 of the IP address 1, the IP address 2, the IP address 3, the IP address 4, and the IP address 5. Next, the CU 2 learns that data packets of these IP addresses are to be rerouted to the first topology, allocates a first BAP routing ID to the data packets of these IP addresses, for example, {IP address 1, IP address 2, IP address 3 }-> first BAP routing ID 1; and {IP address 4, IP address 5}->first BAP routing ID 2, and notifies the CU 1 of these mapping relationships (that is, the first mapping relationship). Then, the CU 1 originally knows a mapping relationship (that is, the third mapping relationship) between the IP address and the second BAP routing ID, for example, {IP address 1}->second BAP routing ID 1; {IP address 2, IP address 3 }->second BAP routing ID 2; and {IP address 4, IP address 5}->second BAP routing ID 3. Therefore, the CU 1 may further learn a mapping relationship (that is, the second mapping relationship) between the second BAP routing ID and the first BAP routing ID, as follows: {second BAP routing ID 1, second BAP routing ID 2}->first BAP routing ID 1; and {second BAP routing ID 3}->first BAP routing ID 2. Finally, the CU 1 sends the mapping relationship between the second BAP routing ID and the first BAP routing ID to the IAB DU 2, and the IAB DU 2 rewrites the BAP routing ID based on the mapping relationship. For example, for an uplink data packet whose BAP routing ID in the BAP header is the second BAP routing ID 3, the IAB DU 2 rewrites the BAP routing ID into the first BAP routing ID 2, and sends the first BAP routing ID 2 to the IAB DU 3 via the IAB MT 2. The IAB DU 3 can correctly identify information in the first BAP routing ID 2.

For another example, an uplink data packet in the system architecture shown in FIG. 7 is used as an example. First, the CU 1 learns, based on a context of boundary traffic, that three IP addresses, namely, the IP address 1, the IP address 2, and the IP address 3, send data to the CU 1 before over the second topology, and now data sent by the IP addresses needs to be rerouted to the first topology. Therefore, the CU 1 notifies the CU 2 of the IP address 1, the IP address 2 and the IP address 3. Next, the CU 2 learns that data packets of these IP addresses are to be rerouted to the first topology, allocates a first BAP routing ID to the data packets of these IP addresses, for example, {IP address 1}->first BAP routing ID 1; {IP address 2}->first BAP routing ID 2; and {IP address 3 }->first BAP routing ID 3, and notifies the CU 1 of these mapping relationships (that is, the first mapping relationship). Then, the CU 1 originally knows a mapping relationship (that is, the third mapping relationship) between the IP address and the second BAP routing ID, for example, {IP address 1 }->second BAP routing ID 3; {IP address 2} ->second BAP routing ID 2; and {IP address 3 }->second BAP routing ID 1. Therefore, the CU 1 may further learn a mapping relationship (that is, the second mapping relationship) between the second BAP routing ID and the first BAP routing ID, as follows: { second BAP routing ID}->first BAP routing ID 3; {second BAP routing ID 2}->first BAP routing ID 2; and {second BAP routing ID 3 }->first BAP routing ID 1. Finally, the CU 1 sends the mapping relationship between the second BAP routing ID and the first BAP routing ID to the IAB DU 2, and the IAB DU 2 rewrites the BAP routing ID based on the mapping relationship. For example, for an uplink data packet whose BAP routing ID in the BAP header is the second BAP routing ID 3, the IAB DU 2 rewrites the BAP routing ID into the first BAP routing ID 1, and sends the first BAP routing ID 1 to the IAB DU 3 via the IAB MT 2. The IAB DU 3 can correctly identify information in the first BAP routing ID 2.

In this embodiment of this application, an inter-CU rerouting method is provided for a handover scenario. Specifically, the second node interacts with the first node, uses the IP address as an intermediate variable, generates a mapping relationship between a new BAP routing ID and an old BAP routing ID, and notifies the third node (namely, a boundary node). This can implement data packet rerouting, improve a transmission success rate, and reduce service interruption.

The following describes in detail the communication apparatus provided in this application with reference to FIG. 10 to FIG. 12.

FIG. 10 is a diagram of a structure of a communication apparatus according to an embodiment of this application. The communication apparatus shown in FIG. 10 may be configured to perform some or all functions of the first node in the method embodiments described in FIG. 6 to FIG. 9. The apparatus may be a first node, or may be an apparatus in a first node, or may be an apparatus that can be used together with the first node. The communication apparatus may alternatively be a chip system. The communication apparatus shown in FIG. 10 may include a transceiver unit 1001 and a processing unit 1002. The processing unit 1002 is configured to perform data processing. The transceiver unit 1001 is integrated with a receiving unit and a sending unit. The transceiver unit 1001 may also be referred to as a communication unit. Alternatively, the transceiver unit 1001 may be split into a receiving unit and a sending unit. The processing unit 1002 and the transceiver unit 1001 below are similar to those described herein, and details are not described below again.

In an implementation, the transceiver unit 1001 is configured to receive a first message from a second node, where the first message indicates to reconfigure a resource that is in a first topology and that is used to serve first traffic, the first topology is a topology controlled by the first node, and the first traffic is traffic of a third node or traffic of a downstream node of the third node; and
the processing unit 1002 is configured to reconfigure, based on the first message, the resource that is in the first topology and that is used to serve the first traffic, where
there is an RRC connection between the third node and each of the first node and the second node, there is an F1 connection between the third node and the second node, the first node is a central unit CU in a first integrated access and backhaul IAB donor node, and the second node is a central unit CU in a second IAB donor node.

In a possible implementation, the first message includes at least one of the following information: indication information for reconfiguring all resources for the first traffic, a resource corresponding to a quality of service index in the resource for the first traffic, and a resource corresponding to a tunnel endpoint identifier TEID in the resource for the first traffic.

In a possible implementation, the first message further indicates a traffic control trigger reason.

In a possible implementation, the traffic control trigger reason includes that congestion occurs or signal quality does not meet a quality requirement.

In a possible implementation, the transceiver unit 1001 is further configured to:
send a first feedback of the first message to the second node, where the first feedback is used to trigger the second node to reconfigure a resource that is in a second topology and that is used to serve the first traffic, and the second topology is a topology controlled by the second node.

In a possible implementation, the second topology includes a distributed unit DU of the second node.

In a possible implementation, the first topology includes a DU of the first node.

In a possible implementation, the processing unit 1002 is specifically configured to:
delete, based on the first message, the resource that is in the first topology and that is used to serve the first traffic.

In a possible implementation, the first IAB donor node is a secondary IAB donor node, and the second IAB donor node is a master IAB donor node; or
the first IAB donor node is a master IAB donor node, and the second IAB donor node is a secondary IAB donor node.

In a possible implementation, the first message is an Xn message. In another implementation, a transceiver unit 1001 is configured to receive, from a second node, at least one target internet protocol IP address corresponding to a data packet of a first service;
a processing unit 1002 is configured to determine a first parameter corresponding to each target IP address; and
the transceiver unit 1001 is configured to send, to the second node, the first parameter corresponding to each target IP address, where
the first parameter reflects a quality of service QoS requirement of the first service, the target IP address and the first parameter corresponding to the target IP address are used to determine a radio link control channel RLC CH corresponding to the first service, the first node is a central unit CU in a secondary IAB donor node in a dual connectivity mode, and the second node is a central unit CU in a master IAB donor node in the dual connectivity mode.

In a possible implementation, one target IP address corresponds to one first parameter; and
the transceiver unit 1001 is specifically configured to:
send, to the second node based on a receiving order of the at least one target IP address, the first parameter corresponding to each target IP address; or
send a 1:1 mapping relationship between the first parameter and each target IP address to the second node.

In a possible implementation, a plurality of target IP addresses correspond to one first parameter; and
the transceiver unit 1001 is specifically configured to:
send, to the second node based on a receiving order of the at least one target IP address, the first parameter corresponding to each target IP address; or
send a 1:N mapping relationship between the first parameter and the plurality of target IP addresses to the second node.

In a possible implementation, the target IP address includes an IPv4 address, and the first parameter includes a differentiated services code point DSCP.

In a possible implementation, the target IP address includes an IPv6 address, and the first parameter includes a DSCP and an IPv6 flow label.

In another implementation, a transceiver unit 1001 is configured to receive, from a second node, a first internet protocol IP address corresponding to a data packet of a first service; and
the transceiver unit 1001 is configured to send a first mapping relationship between the first IP address and a first backhaul adaptation protocol routing identifier BAP routing ID to the second node.

In a possible implementation, the first IP address includes a source IP address.

For another possible implementation of the communication apparatus, refer to the related descriptions of the functions of the access network device in the method embodiments corresponding to FIG. 6 to FIG. 9. Details are not described herein again.

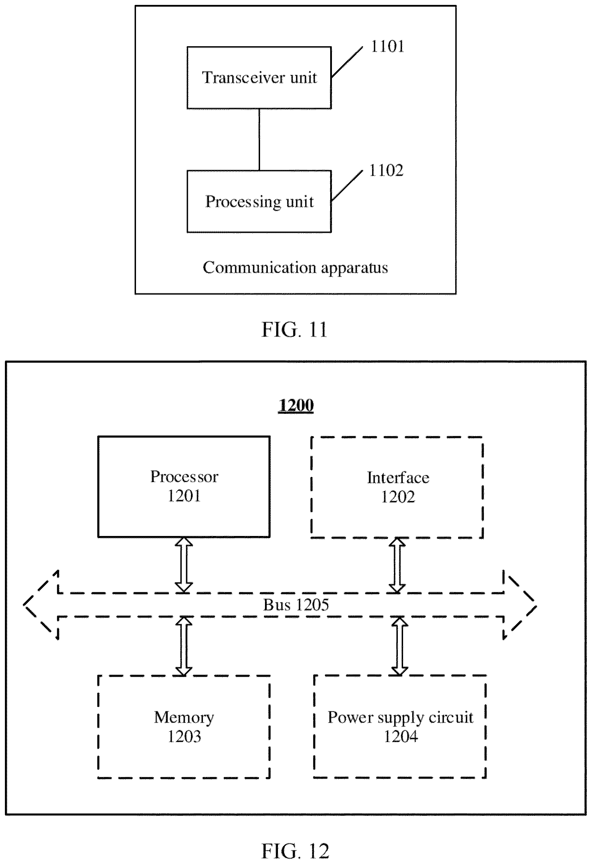

FIG. 11 is a diagram of a structure of another communication apparatus according to an embodiment of this application. The communication apparatus shown in FIG. 11 may be configured to perform some or all functions of the second node in the method embodiments described in FIG. 6 to FIG. 9. The apparatus may be a second node, or may be an apparatus in a second node, or may be an apparatus that can be used together with the second node. The communication apparatus may alternatively be a chip system. The communication apparatus shown in FIG. 11 may include a transceiver unit 1101 and a processing unit 1102.

In an implementation, the processing unit 1102 is configured to determine a first message, where the first message indicates to reconfigure a resource that is in a first topology and that is used to serve first traffic, the first topology is a topology controlled by a first node, and the first traffic is traffic of a third node or traffic of a downstream node of the third node; and
the transceiver unit 1101 is configured to send the first message to the first node, where
there is an RRC connection between the third node and each of the first node and the second node, there is an F1 connection between the third node and the second node, the first node is a central unit CU in a first integrated access and backhaul IAB donor node, and the second node is a central unit CU in a second IAB donor node.

In a possible implementation, the first message includes at least one of the following information: indication information for reconfiguring all resources for the first traffic, a resource corresponding to a quality of service index in the resource for the first traffic, and a resource corresponding to a tunnel endpoint identifier TEID in the resource for the first traffic.

In a possible implementation, the first message further indicates a traffic control trigger reason.

In a possible implementation, the traffic control trigger reason includes that congestion occurs or signal quality does not meet a quality requirement.

In a possible implementation, the transceiver unit 1101 is further configured to receive a first feedback of the first message from the first node; and
the processing unit 1102 is further configured to reconfigure, in response to the first feedback, a resource that is in a second topology and that is used to serve the first traffic, where the second topology is a topology controlled by the second node.

In a possible implementation, the second topology includes a distributed unit DU of the second node.

In a possible implementation, the first topology includes a DU of the first node.

In a possible implementation, the processing unit 1102 is specifically configured to:
delete the resource that is in the second topology and that is used to serve the first traffic.

In a possible implementation, the first IAB donor node is a secondary IAB donor node, and the second IAB donor node is a master IAB donor node; or
the first IAB donor node is a master IAB donor node, and the second IAB donor node is a secondary IAB donor node.

In a possible implementation, the first message is an Xn message.

In a possible implementation, the transceiver unit 1101 is further configured to:
receive a status indication message, where the status indication message is used to determine the first message.

In another implementation, a transceiver unit 1101 is configured to send, to a first node, at least one target internet protocol IP address corresponding to a data packet of a first service; and
the transceiver unit 1101 is configured to receive, from the first node, a first parameter corresponding to each target IP address, where
the first parameter reflects a quality of service QoS requirement of the first service, the target IP address and the first parameter corresponding to the target IP address are used to determine a radio link control channel RLC CH corresponding to the first service, the first node is a central unit CU in a secondary IAB donor node in a dual connectivity mode, and the second node is a central unit CU in a master IAB donor node in the dual connectivity mode.

In a possible implementation, one target IP address corresponds to one first parameter; and
the transceiver unit 1101 is specifically configured to:
receive, from the first node based on a sending order of the at least one target IP address, the first parameter corresponding to each target IP address; or
receive a 1:1 mapping relationship between the first parameter and each target IP address from the first node.

In a possible implementation, a plurality of target IP addresses correspond to one first parameter; and
the transceiver unit 1101 is specifically configured to:
receive, from the first node based on a sending order of the at least one target IP address, the first parameter corresponding to each target IP address; or
receive a 1:N mapping relationship between the first parameter and the plurality of target IP addresses from the first node.

In a possible implementation, the target IP address includes an IPv4 address, and the first parameter includes a differentiated services code point DSCP.

In a possible implementation, the target IP address includes an IPv6 address, and the first parameter includes a DSCP and an IPv6 flow label.

In another implementation, a transceiver unit 1101 is configured to send, to a first node, a first internet protocol IP address corresponding to a data packet of a first service;
the transceiver unit 1101 is configured to receive a first mapping relationship between the first IP address and a first backhaul adaptation protocol routing identifier BAP routing ID from the first node; and
the transceiver unit 1101 is configured to send a second mapping relationship between the first BAP routing ID and a second BAP routing ID to a third node, where the second mapping relationship is used to reroute the data packet of the first service, where
the first node is a central unit CU in a target IAB donor node of the third node, and the second node is a central unit CU in a source IAB donor node of the third node.

In a possible implementation, the first IP address includes a source IP address.

In a possible implementation, the apparatus further includes a processing unit 1102, and the processing unit 1102 is configured to:
obtain a third mapping relationship between the first IP address and the second BAP routing ID; and
determine the second mapping relationship based on the first mapping relationship and the third mapping relationship.

For another possible implementation of the communication apparatus, refer to the related descriptions of the functions of the access network device in the method embodiments corresponding to FIG. 6 to FIG. 9. Details are not described herein again.

FIG. 12 is a diagram of a structure of another communication apparatus according to an embodiment of this application. The communication apparatus may be the first node or the second node described in this application, and is configured to implement functions of the first node or the second node in FIG. 6 to FIG. 9. For ease of description, FIG. 12 shows only main components of the communication apparatus 1200.

As shown in FIG. 12, the communication apparatus 1200 includes one or more processors 1201, and optionally, further includes an interface 1202. When a related program instruction is executed in the at least one processor 1201, the apparatus 1200 may be enabled to implement the communication method provided in any one of the foregoing embodiments and any possible design of the communication method. Alternatively, the processor 1201 is configured to implement, by using a logic circuit or executing code instructions, the communication method provided in any one of the foregoing embodiments and the possible designs thereof. The interface 1202 may be configured to receive the program instructions and transmit the program instructions to the processor. Alternatively, the interface 1202 may be used by the apparatus 1200 to communicate and interact with another communication device, for example, exchange control signaling and/or service data with another communication device. For example, the interface 1202 may be configured to: receive a signal from an apparatus other than the apparatus 1200, and transmit the signal to the processor 1201; or send a signal from the processor 1201 to a communication apparatus other than the apparatus 1200. The interface 1202 may be a code and/or data read/write interface circuit, or the interface 1202 may be a signal transmission interface circuit between a communication processor and a transceiver, or a pin of a chip. Optionally, the communication apparatus 1200 may further include at least one memory 1203, and the memory 1203 may be configured to store the related program instructions and/or data that are/is needed. Optionally, the apparatus 1200 may further include a power supply circuit 1204. The power supply circuit 1204 may be configured to supply power to the processor 1201. The power supply circuit 1204 and the processor 1201 may be located in a same chip, or the power supply circuit 1204 may be located in a chip other than a chip in which the processor 1201 is located. Optionally, the apparatus 1200 may further include a bus 1205, and parts in the apparatus 1200 may be interconnected through the bus 1205.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or the processor may be any conventional processor or the like.

It should be further understood that the memory in embodiments of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The power supply circuit in embodiments of this application includes but is not limited to at least one of the following: a power supply line, a power supply subsystem, a power management chip, a power consumption management processor, or a power consumption management control circuit.

A transceiver apparatus, an interface, or the transceiver in embodiments of this application may include a separate transmitter and/or a separate receiver, or the transmitter and the receiver may be integrated. The transceiver apparatus, the interface, or the transceiver may work under an indication of a corresponding processor. Optionally, the transmitter may correspond to a transmitter machine in a physical device, and the receiver may correspond to a receiver machine in the physical device.

It may be clearly understood by a person skilled in the art that, for the purpose of convenient and brief description, division of the foregoing functional modules is used as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In embodiments of this application, it should be understood that the disclosed systems, apparatuses, and methods may be implemented in other manners. For example, the described apparatus embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

A person of ordinary skill in the art may be aware that, in combination with examples described in embodiments disclosed in this specification, units or algorithm operations may be implemented by hardware, software, or a combination of software and hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

In this application, "implemented by software" may mean that a processor reads and executes program instructions stored in a memory to implement a function corresponding to the foregoing module or unit. The processor is a processing circuit that has a function of executing the program instructions, and includes but is not limited to at least one of the following: types of processing circuits that can execute the program instructions such as a central processing unit (central processing unit, CPU), a microprocessor, a digital signal processor (digital signal processor, DSP), a microcontroller (microcontroller unit, MCU), or an artificial intelligence processor. In some other embodiments, the processor may further include a circuit that has another processing function (for example, a hardware circuit, a bus, and an interface that are used for hardware acceleration). The processor may be presented in a form of an integrated chip. For example, the processor may be presented in a form of an integrated chip whose processing function includes only a function of executing software instructions; or the processor may be presented in a form of a system-on-a-chip (system-on-a-chip, SoC). To be specific, on one chip, in addition to the processing circuit (which is usually referred to as a "core") that can execute the program instructions, another hardware circuit configured to implement a specific function is further included (where certainly, the hardware circuit may also be independently implemented based on an ASIC or an FPGA). Correspondingly, in addition to the function of executing software instructions, processing functions may further include various hardware acceleration functions (such as AI computing, encoding and decoding, and compression and decompression).

In this application, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an ASIC, or a programmable logic device (programmable logic device, PLD). The PLD may further include an FPGA, a complex programmable logic device (complex programmable logic device, CPLD), or the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a system-on-a-programmable-chip (system-on-a-programmable-chip, SoPC).

It should be noted that, when this application is implemented by using software, hardware, or a combination of software and hardware, this application may be implemented by using different software and hardware, which is not limited to only one type of software or hardware. For example, one of the modules or units may be implemented through the CPU, and another module or unit may be implemented through the DSP. Similarly, when hardware is used for implementation, one of the modules or units may be implemented through the ASIC, and another module or unit may be implemented through the FPGA. Certainly, it is also not specified that some or all modules or units are implemented by using a same type of software (for example, through the CPU) or a same type of hardware (for example, through the ASIC). In addition, a person skilled in the art may know that, software usually has better flexibility but poorer performance than hardware, and hardware is exactly opposite. Therefore, a person skilled in the art may select software, hardware, or a combination thereof for implementation based on an actual requirement.

In the foregoing embodiments, the description of each embodiment has respective focuses. For a part that is not described in detail in an embodiment, reference may be made to related descriptions in other embodiments. Embodiments of this application may be combined, or some technical features in embodiments may be decoupled from specific embodiments and combined with a conventional technology, to resolve the technical problem in embodiments of this application.

In embodiments of this application, the units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments of this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and may include several instructions for instructing a computer device, for example, a personal computer, a server, or a network device, or a processor (processor) to perform all or a part of the operations of the methods described in embodiments of this application. The foregoing storage medium may include any medium or computer-readable storage medium that can store program code, such as a USB flash drive, a removable hard disk, a read-only memory (read-only memory, ROM), a random access memory (random access memory, RAM), a magnetic disk, or an optical disc.

In descriptions of this application, terms such as "first", "second", "S601", or "S602" are merely used for distinguishing and description and for ease of organizing this article. Different sequences or numbers do not have specific technical meanings, and cannot be understood as an indication or an implication of relative importance, or an indication or an implication of an operation execution sequence.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In descriptions of this application, unless otherwise specified, a quantity of nouns represents "a singular noun or a plural noun", that is, "one or more". "At least one" indicates one or more. "Including at least one of the following: A, B, and C" indicates including A, including B, including C, including A and B, including A and C, including B and C, or including A, B and C. A, B, and C may be singular or plural.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, wherein the method is applied to a first node and comprises:
receiving a first message from a second node, wherein the first message indicates to reconfigure a resource that is in a first topology and that is used to serve first traffic, the first topology is a topology controlled by the first node, and the first traffic is traffic of a third node or traffic of a downstream node of the third node; and
reconfiguring, based on the first message, the resource that is in the first topology and that is used to serve the first traffic, wherein
there is a radio resource control RRC connection between the third node and each of the first node and the second node, there is an F1 connection between the third node and the second node, the first node is a central unit CU in a first integrated access and backhaul IAB donor node, and the second node is a CU in a second IAB donor node.

2. The method according to claim 1, wherein the first message comprises at least one of the following information: indication information for reconfiguring all resources for the first traffic, a resource corresponding to a quality of service index in the resource for the first traffic, and a resource corresponding to a tunnel endpoint identifier TEID in the resource for the first traffic.

3. The method according to claim 1 or 2, wherein the first message is an Xn message.

4. The method according to any one of claims 1 to 3, wherein the first message further indicates a traffic control trigger reason.

5. The method according to claim 4, wherein the traffic control trigger reason comprises that congestion occurs or signal quality does not meet a quality requirement.

6. The method according to any one of claims 1 to 5, wherein the method further comprises:
sending a first feedback of the first message to the second node, wherein the first feedback is used to trigger the second node to reconfigure a resource that is in a second topology and that is used to serve the first traffic, and the second topology is a topology controlled by the second node.

7. The method according to claim 6, wherein the second topology comprises a distributed unit DU of the second node.

8. The method according to any one of claims 1 to 7, wherein the first topology comprises a DU of the first node.

9. The method according to any one of claims 1 to 8, wherein the reconfiguring, based on the first message, the resource that is in the first topology and that is used to serve the first traffic comprises:
deleting, based on the first message, the resource that is in the first topology and that is used to serve the first traffic.

10. The method according to any one of claims 1 to 9, wherein
the first IAB donor node is a secondary IAB donor node, and the second IAB donor node is a master IAB donor node; or
the first IAB donor node is a master IAB donor node, and the second IAB donor node is a secondary IAB donor node.

11. A communication method, wherein the method is applied to a second node and comprises:
determining a first message, wherein the first message indicates to reconfigure a resource that is in a first topology and that is used to serve first traffic, the first topology is a topology controlled by a first node, and the first traffic is traffic of a third node or traffic of a downstream node of the third node; and
sending the first message to the first node, wherein
there is a radio resource control RRC connection between the third node and each of the first node and the second node, there is an F1 connection between the third node and the second node, the first node is a central unit CU in a first integrated access and backhaul IAB donor node, and the second node is a CU in a second IAB donor node.

12. The method according to claim 11, wherein the first message comprises at least one of the following information: indication information for reconfiguring all resources for the first traffic, a resource corresponding to a quality of service index in the resource for the first traffic, and a resource corresponding to a tunnel endpoint identifier TEID in the resource for the first traffic.

13. The method according to claim 11 or 12, wherein the first message is an Xn message.

14. The method according to any one of claims 11 to 13, wherein the first message further indicates a traffic control trigger reason.

15. The method according to claim 14, wherein the traffic control trigger reason comprises that congestion occurs or signal quality does not meet a quality requirement.

16. The method according to any one of claims 11 to 15, wherein the method further comprises:
receiving a first feedback of the first message from the first node; and
reconfiguring, in response to the first feedback, a resource that is in a second topology and that is used to serve the first traffic, wherein the second topology is a topology controlled by the second node.

17. The method according to claim 16, wherein the second topology comprises a distributed unit DU of the second node.

18. The method according to any one of claims 11 to 17, wherein the first topology comprises a DU of the first node.

19. The method according to claim 16 or 17, wherein the reconfiguring a resource that is in a second topology and that is used to serve the first traffic comprises:
deleting the resource that is in the second topology and that is used to serve the first traffic.

20. The method according to any one of claims 11 to 19, wherein
the first IAB donor node is a secondary IAB donor node, and the second IAB donor node is a master IAB donor node; or
the first IAB donor node is a master IAB donor node, and the second IAB donor node is a secondary IAB donor node.

21. The method according to any one of claims 11 to 20, wherein the method further comprises:
receiving a status indication message, wherein the status indication message is used to determine the first message.

22. A communication method, wherein the method is applied to a first node and comprises:
receiving, from a second node, at least one target internet protocol IP address corresponding to a data packet of a first service;
determining a first parameter corresponding to each target IP address; and
sending, to the second node, the first parameter corresponding to each target IP address, wherein
the first parameter reflects a quality of service QoS requirement of the first service, the target IP address and the first parameter corresponding to the target IP address are used to determine a radio link control channel RLC CH corresponding to the first service, the first node is a central unit CU in a secondary IAB donor node in a dual connectivity mode, and the second node is a central unit CU in a master IAB donor node in the dual connectivity mode.

23. The method according to claim 22, wherein one target IP address corresponds to one first parameter; and
the sending, to the second node, the first parameter corresponding to each target IP address comprises:
sending, to the second node based on a receiving order of the at least one target IP address, the first parameter corresponding to each target IP address; or
sending a 1:1 mapping relationship between the first parameter and each target IP address to the second node.

24. The method according to claim 22, wherein a plurality of target IP addresses correspond to one first parameter; and
the sending, to the second node, the first parameter corresponding to each target IP address comprises:
sending, to the second node based on a receiving order of the at least one target IP address, the first parameter corresponding to each target IP address; or
sending a 1:N mapping relationship between the first parameter and the plurality of target IP addresses to the second node.

25. The method according to any one of claims 22 to 24, wherein the target IP address comprises an IPv4 address, and the first parameter comprises a differentiated services code point DSCP.

26. The method according to any one of claims 22 to 24, wherein the target IP address comprises an IPv6 address, and the first parameter comprises a DSCP and an IPv6 flow label.

27. A communication method, wherein the method is applied to a second node and comprises:
sending, to a first node, at least one target internet protocol IP address corresponding to a data packet of a first service; and
receiving, from the first node, a first parameter corresponding to each target IP address, wherein
the first parameter reflects a quality of service QoS requirement of the first service, the target IP address and the first parameter corresponding to the target IP address are used to determine a radio link control channel RLC CH corresponding to the first service, the first node is a central unit CU in a secondary IAB donor node in a dual connectivity mode, and the second node is a central unit CU in a master IAB donor node in the dual connectivity mode.

28. The method according to claim 27, wherein one target IP address corresponds to one first parameter; and
the receiving, from the first node, a first parameter corresponding to each target IP address comprises:
receiving, from the first node based on a sending order of the at least one target IP address, the first parameter corresponding to each target IP address; or
receiving a 1:1 mapping relationship between the first parameter and each target IP address from the first node.

29. The method according to claim 27, wherein a plurality of target IP addresses correspond to one first parameter; and
the receiving, from the first node, a first parameter corresponding to each target IP address comprises:
receiving, from the first node based on a sending order of the at least one target IP address, the first parameter corresponding to each target IP address; or
receiving a 1 :N mapping relationship between the first parameter and the plurality of target IP addresses from the first node.

30. The method according to any one of claims 27 to 29, wherein the target IP address comprises an IPv4 address, and the first parameter comprises a differentiated services code point DSCP.

31. The method according to any one of claims 27 to 29, wherein the target IP address comprises an IPv6 address, and the first parameter comprises a DSCP and an IPv6 flow label.

32. A communication method, wherein the method is applied to a second node and comprises:
sending, to a first node, a first internet protocol IP address corresponding to a data packet of a first service;
receiving a first mapping relationship between the first IP address and a first backhaul adaptation protocol routing identifier BAP routing ID from the first node; and
sending a second mapping relationship between the first BAP routing ID and a second BAP routing ID to a third node, wherein the second mapping relationship is used to reroute the data packet of the first service; and
the first node is a central unit CU in a target IAB donor node of the third node, and the second node is a central unit CU in a source IAB donor node of the third node.

33. The method according to claim 32, wherein the first IP address comprises a source IP address.

34. The method according to claim 32 or 33, wherein the method further comprises:
obtaining a third mapping relationship between the first IP address and the second BAP routing ID; and
determining the second mapping relationship based on the first mapping relationship and the third mapping relationship.

35. A communication method, wherein the method is applied to a first node and comprises:
receiving, from a second node, a first internet protocol IP address corresponding to a data packet of a first service; and
sending a first mapping relationship between the first IP address and a first backhaul adaptation protocol routing identifier BAP routing ID to the second node.

36. The method according to claim 35, wherein the first IP address comprises a source IP address.

37. A communication method, wherein the method comprises:
determining, by a second node, a first message, wherein the first message indicates to reconfigure a resource that is in a first topology and that is used to serve first traffic, the first topology is a topology controlled by a first node, and the first traffic is traffic of a third node or traffic of a downstream node of the third node;
sending, by the second node, the first message to the first node; and
reconfiguring, by the first node based on the first message, the resource that is in the first topology and that is used to serve the first traffic, wherein
there is a radio resource control RRC connection between the third node and each of the first node and the second node, there is an F1 connection between the third node and the second node, the first node is a central unit CU in a first integrated access and backhaul IAB donor node, and the second node is a CU in a second IAB donor node.

38. The method according to claim 37, wherein the first message comprises at least one of the following information: indication information for reconfiguring all resources for the first traffic, a resource corresponding to a quality of service index in the resource for the first traffic, and a resource corresponding to a tunnel endpoint identifier TEID in the resource for the first traffic.

39. The method according to claim 37 or 38, wherein the first message is an Xn message.

40. The method according to any one of claims 37 to 39, wherein the first message further indicates a traffic control trigger reason.

41. The method according to claim 40, wherein the traffic control trigger reason comprises that congestion occurs or signal quality does not meet a quality requirement.

42. The method according to any one of claims 37 to 41, wherein the method further comprises:
sending, by the first node, a first feedback of the first message to the second node; and
reconfiguring, by the second node in response to the first feedback, a resource that is in a second topology and that is used to serve the first traffic, wherein the second topology is a topology controlled by the second node.

43. The method according to claim 42, wherein the second topology comprises a distributed unit DU of the second node.

44. The method according to any one of claims 37 to 43, wherein the first topology comprises a DU of the first node.

45. The method according to any one of claims 37 to 44, wherein the reconfiguring, by the first node based on the first message, the resource that is in the first topology and that is used to serve the first traffic comprises:
deleting, by the first node based on the first message, the resource that is in the first topology and that is used to serve the first traffic.

46. The method according to claim 42 or 43, wherein the reconfiguring, by the second node, a resource that is in a second topology and that is used to serve the first traffic comprises:
deleting, by the second node, the resource that is in the second topology and that is used to serve the first traffic.

47. The method according to any one of claims 37 to 46, wherein
the first IAB donor node is a secondary IAB donor node, and the second IAB donor node is a master IAB donor node; or
the first IAB donor node is a master IAB donor node, and the second IAB donor node is a secondary IAB donor node.

48. The method according to any one of claims 37 to 47, wherein the method further comprises:
receiving, by the second node, a status indication message, wherein the status indication message is used to determine the first message.

49. A communication method, wherein the method comprises:
sending, by a second node to a first node, at least one target internet protocol IP address corresponding to a data packet of a first service;
determining, by the first node, a first parameter corresponding to each target IP address; and
sending, by the first node to the second node, the first parameter corresponding to each target IP address, wherein
the first parameter reflects a quality of service QoS requirement of the first service, the target IP address and the first parameter corresponding to the target IP address are used to determine a radio link control channel RLC CH corresponding to the first service, the first node is a central unit CU in a secondary IAB donor node in a dual connectivity mode, and the second node is a central unit CU in a master IAB donor node in the dual connectivity mode.

50. The method according to claim 49, wherein one target IP address corresponds to one first parameter; and
the sending, by the first node to the second node, the first parameter corresponding to each target IP address comprises:
sending, by the first node to the second node based on a receiving order of the at least one target IP address, the first parameter corresponding to each target IP address; or
sending, by the first node to the second node, a 1:1 mapping relationship between the first parameter and each target IP address.

51. The method according to claim 49, wherein a plurality of target IP addresses correspond to one first parameter; and
the sending, by the first node to the second node, the first parameter corresponding to each target IP address comprises:
sending, by the first node to the second node based on a receiving order of the at least one target IP address, the first parameter corresponding to each target IP address; or
sending, by the first node to the second node, a 1:N mapping relationship between the first parameter and the plurality of target IP addresses.

52. The method according to any one of claims 49 to 51, wherein the target IP address comprises an IPv4 address, and the first parameter comprises a differentiated services code point DSCP.

53. The method according to any one of claims 49 to 51, wherein the target IP address comprises an IPv6 address, and the first parameter comprises a DSCP and an IPv6 flow label.

54. A communication method, wherein the method comprises:
sending, by a second node to a first node, a first internet protocol IP address corresponding to a data packet of a first service;
sending, by the first node to the second node, a first mapping relationship between the first IP address and a first backhaul adaptation protocol routing identifier BAP routing ID; and
sending, by the second node to a third node, a second mapping relationship between the first BAP routing ID and a second BAP routing ID, wherein the second mapping relationship is used to reroute the data packet of the first service, wherein
the first node is a central unit CU in a target IAB donor node of the third node, and the second node is a central unit CU in a source IAB donor node of the third node.

55. The method according to claim 54, wherein the first IP address comprises a source IP address.

56. The method according to claim 54 or 55, wherein the method further comprises:
obtaining, by the second node, a third mapping relationship between the first IP address and the second BAP routing ID; and
determining, by the second node, the second mapping relationship based on the first mapping relationship and the third mapping relationship.

57. A communication apparatus, wherein the apparatus is a first node and comprises:
a transceiver unit, configured to receive a first message from a second node, wherein the first message indicates to reconfigure a resource that is in a first topology and that is used to serve first traffic, the first topology is a topology controlled by the first node, and the first traffic is traffic of a third node or traffic of a downstream node of the third node; and
a processing unit, configured to reconfigure, based on the first message, the resource that is in the first topology and that is used to serve the first traffic, wherein
there is an RRC connection between the third node and each of the first node and the second node, there is an F1 connection between the third node and the second node, the first node is a central unit CU in a first integrated access and backhaul IAB donor node, and the second node is a central unit CU in a second IAB donor node.

58. The apparatus according to claim 57, wherein the first message comprises at least one of the following information: indication information for reconfiguring all resources for the first traffic, a resource corresponding to a quality of service index in the resource for the first traffic, and a resource corresponding to a tunnel endpoint identifier TEID in the resource for the first traffic.

59. The apparatus according to claim 57 or 58, wherein the first message is an Xn message.

60. The apparatus according to any one of claims 57 to 59, wherein the first message further indicates a traffic control trigger reason.

61. The apparatus according to claim 60, wherein the traffic control trigger reason comprises that congestion occurs or signal quality does not meet a quality requirement.

62. The apparatus according to any one of claims 57 to 61, wherein the transceiver unit is further configured to:
send a first feedback of the first message to the second node, wherein the first feedback is used to trigger the second node to reconfigure a resource that is in a second topology and that is used to serve the first traffic, and the second topology is a topology controlled by the second node.

63. The apparatus according to claim 62, wherein the second topology comprises a distributed unit DU of the second node.

64. The apparatus according to any one of claims 57 to 63, wherein the first topology comprises a DU of the first node.

65. The apparatus according to any one of claims 57 to 64, wherein the processing unit is specifically configured to:
delete, based on the first message, the resource that is in the first topology and that is used to serve the first traffic.

66. The apparatus according to any one of claims 57 to 65, wherein the first IAB donor node is a secondary IAB donor node, and the second IAB donor node is a master IAB donor node; or
the first IAB donor node is a master IAB donor node, and the second IAB donor node is a secondary IAB donor node.

67. A communication apparatus, wherein the apparatus is a second node and comprises:
a processing unit, configured to determine a first message, wherein the first message indicates to reconfigure a resource that is in a first topology and that is used to serve first traffic, the first topology is a topology controlled by a first node, and the first traffic is traffic of a third node or traffic of a downstream node of the third node; and
a transceiver unit, configured to send the first message to the first node, wherein
there is an RRC connection between the third node and each of the first node and the second node, there is an F1 connection between the third node and the second node, the first node is a central unit CU in a first integrated access and backhaul IAB donor node, and the second node is a central unit CU in a second IAB donor node.

68. The apparatus according to claim 67, wherein the first message comprises at least one of the following information: indication information for reconfiguring all resources for the first traffic, a resource corresponding to a quality of service index in the resource for the first traffic, and a resource corresponding to a tunnel endpoint identifier TEID in the resource for the first traffic.

69. The apparatus according to claim 67 or 68, wherein the first message is an Xn message.

70. The apparatus according to any one of claims 67 to 69, wherein the first message further indicates a traffic control trigger reason.

71. The apparatus according to claim 70, wherein the traffic control trigger reason comprises that congestion occurs or signal quality does not meet a quality requirement.

72. The apparatus according to any one of claims 67 to 71, wherein
the transceiver unit is further configured to receive a first feedback of the first message from the first node; and
the processing unit is further configured to reconfigure, in response to the first feedback, a resource that is in a second topology and that is used to serve the first traffic, wherein the second topology is a topology controlled by the second node.

73. The apparatus according to claim 72, wherein the second topology comprises a distributed unit DU of the second node.

74. The apparatus according to any one of claims 67 to 73, wherein the first topology comprises a DU of the first node.

75. The apparatus according to claim 72 or 73, wherein the processing unit is specifically configured to:
delete the resource that is in the second topology and that is used to serve the first traffic.

76. The apparatus according to any one of claims 67 to 75, wherein the first IAB donor node is a secondary IAB donor node, and the second IAB donor node is a master IAB donor node; or
the first IAB donor node is a master IAB donor node, and the second IAB donor node is a secondary IAB donor node.

77. The apparatus according to any one of claims 67 to 76, wherein the transceiver unit is further configured to:
receive a status indication message, wherein the status indication message is used to determine the first message.

78. A communication apparatus, wherein the apparatus is a first node and comprises:
a transceiver unit, configured to receive, from a second node, at least one target internet protocol IP address corresponding to a data packet of a first service;
a processing unit, configured to determine a first parameter corresponding to each target IP address, wherein
the transceiver unit is configured to send, to the second node, the first parameter corresponding to each target IP address; and
the first parameter reflects a quality of service QoS requirement of the first service, the target IP address and the first parameter corresponding to the target IP address are used to determine a radio link control channel RLC CH corresponding to the first service, the first node is a central unit CU in a secondary IAB donor node in a dual connectivity mode, and the second node is a central unit CU in a master IAB donor node in the dual connectivity mode.

79. The apparatus according to claim 78, wherein one target IP address corresponds to one first parameter; and
the transceiver unit is specifically configured to:
send, to the second node based on a receiving order of the at least one target IP address, the first parameter corresponding to each target IP address; or
send a 1:1 mapping relationship between the first parameter and each target IP address to the second node.

80. The apparatus according to claim 78, wherein a plurality of target IP addresses correspond to one first parameter; and
the transceiver unit is specifically configured to:
send, to the second node based on a receiving order of the at least one target IP address, the first parameter corresponding to each target IP address; or
send a 1:N mapping relationship between the first parameter and the plurality of target IP addresses to the second node.

81. The apparatus according to any one of claims 78 to 80, wherein the target IP address comprises an IPv4 address, and the first parameter comprises a differentiated services code point DSCP.

82. The apparatus according to any one of claims 78 to 80, wherein the target IP address comprises an IPv6 address, and the first parameter comprises a DSCP and an IPv6 flow label.

83. A communication apparatus, wherein the apparatus is a second node and comprises:
a transceiver unit, configured to send, to a first node, at least one target internet protocol IP address corresponding to a data packet of a first service, wherein
the transceiver unit is configured to receive, from the first node, a first parameter corresponding to each target IP address; and
the first parameter reflects a quality of service QoS requirement of the first service, the target IP address and the first parameter corresponding to the target IP address are used to determine a radio link control channel RLC CH corresponding to the first service, the first node is a central unit CU in a secondary IAB donor node in a dual connectivity mode, and the second node is a central unit CU in a master IAB donor node in the dual connectivity mode.

84. The apparatus according to claim 83, wherein one target IP address corresponds to one first parameter; and
the transceiver unit is specifically configured to:
receive, from the first node based on a sending order of the at least one target IP address, the first parameter corresponding to each target IP address; or
receive a 1:1 mapping relationship between the first parameter and each target IP address from the first node.

85. The apparatus according to claim 83, wherein a plurality of target IP addresses correspond to one first parameter; and
the transceiver unit is specifically configured to:
receive, from the first node based on a sending order of the at least one target IP address, the first parameter corresponding to each target IP address; or
receive a 1:N mapping relationship between the first parameter and the plurality of target IP addresses from the first node.

86. The apparatus according to any one of claims 83 to 85, wherein the target IP address comprises an IPv4 address, and the first parameter comprises a differentiated services code point DSCP.

87. The apparatus according to any one of claims 83 to 85, wherein the target IP address comprises an IPv6 address, and the first parameter comprises a DSCP and an IPv6 flow label.

88. A communication apparatus, wherein the apparatus is a second node and comprises:
a transceiver unit, configured to send, to a first node, a first internet protocol IP address corresponding to a data packet of a first service, wherein
the transceiver unit is configured to receive a first mapping relationship between the first IP address and a first backhaul adaptation protocol routing identifier BAP routing ID from the first node;
the transceiver unit is configured to send a second mapping relationship between the first BAP routing ID and a second BAP routing ID to a third node, wherein the second mapping relationship is used to reroute the data packet of the first service; and
the first node is a central unit CU in a target IAB donor node of the third node, and the second node is a central unit CU in a source IAB donor node of the third node.

89. The apparatus according to claim 88, wherein the first IP address comprises a source IP address.

90. The apparatus according to claim 88 or 89, wherein the apparatus further comprises a processing unit, and the processing unit is configured to:
obtain a third mapping relationship between the first IP address and the second BAP routing ID; and
determine the second mapping relationship based on the first mapping relationship and the third mapping relationship.

91. A communication apparatus, wherein the apparatus is a first node and comprises:
a transceiver unit, configured to receive, from a second node, a first internet protocol IP address corresponding to a data packet of a first service, wherein
the transceiver unit is configured to send a first mapping relationship between the first IP address and a first backhaul adaptation protocol routing identifier BAP routing ID to the second node.

92. The apparatus according to claim 91, wherein the first IP address comprises a source IP address.

93. A communication apparatus, wherein the apparatus is a first node, and the apparatus is configured to perform the method according to any one of claims 1 to 10, or configured to perform the method according to any one of claims 22 to 26, or configured to perform the method according to any one of claims 35 and 36.

94. A communication apparatus, wherein the apparatus is a second node, and the apparatus is configured to perform the method according to any one of claims 11 to 21, or configured to perform the method according to any one of claims 27 to 31, or configured to perform the method according to any one of claims 32 to 34.

95. A communication apparatus, wherein the apparatus is a first node and comprises a processor and a transceiver, and the processor and the transceiver are configured to execute a computer program or instructions stored in at least one memory, so that the apparatus implements the method according to any one of claims 1 to 10, or implements the method according to any one of claims 22 to 26, or implements the method according to any one of claims 35 and 36.

96. A communication apparatus, wherein the apparatus is a second node and comprises a processor and a transceiver, and the processor and the transceiver are configured to execute a computer program or instructions stored in at least one memory, so that the apparatus implements the method according to any one of claims 11 to 21, or implements the method according to any one of claims 27 to 31, or implements the method according to any one of claims 32 to 34.

97. A computer-readable storage medium, wherein the storage medium stores a computer program or instructions, and when the computer program or instructions are executed by a computer, the method according to any one of claims 1 to 10 is implemented, or the method according to any one of claims 22 to 26 is implemented, or the method according to any one of claims 35 and 36 is implemented.

98. A computer-readable storage medium, wherein the storage medium stores a computer program or instructions, and when the computer program or instructions are executed by a computer, the method according to any one of claims 11 to 21 is implemented, or the method according to any one of claims 27 to 31 is implemented, or the method according to any one of claims 32 to 34 is implemented.

99. A computer program product, wherein the computer program product comprises computer program code, and when the computer program code is run on a computer, the method according to any one of claims 1 to 10 is implemented, or the method according to any one of claims 22 to 26 is implemented, or the method according to any one of claims 35 and 36 is implemented.

100. A computer program product, wherein the computer program product comprises computer program code, and when the computer program code is run on a computer, the method according to any one of claims 11 to 21 is implemented, or the method according to any one of claims 27 to 31 is implemented, or the method according to any one of claims 32 to 34 is implemented.

101. A chip or a chip system, comprising an input/output interface and a processing circuit, wherein the input/output interface is configured to exchange information or data, and the processing circuit is configured to run instructions, to enable an apparatus installed with the chip or the chip system to perform the method according to any one of claims 1 to 10, or perform the method according to any one of claims 22 to 26, or perform the method according to any one of claims 35 and 36.

102. A chip or a chip system, comprising an input/output interface and a processing circuit, wherein the input/output interface is configured to exchange information or data, and the processing circuit is configured to run instructions, to enable an apparatus installed with the chip or the chip system to perform the method according to any one of claims 11 to 21, or perform the method according to any one of claims 27 to 31, or perform the method according to any one of claims 32 to 34.

103. A communication system, comprising a first node and a second node, wherein the first node comprises a unit or module configured to perform the method according to any one of claims 1 to 10, or comprises a unit or module configured to perform the method according to any one of claims 22 to 26, or comprises a unit or module configured to perform the method according to any one of claims 35 and 36; and the second node comprises a unit or module configured to perform the method according to any one of claims 11 to 21, or comprises a unit or module configured to perform the method according to any one of claims 27 to 31, or comprises a unit or module configured to perform the method according to any one of claims 32 to 34.
